(19) Europäisches Patentamt
European Patent Office
Office européen des brevets

(11) EP 4 382 542 A1

(12) EUROPEAN PATENT APPLICATION
published in accordance with Art. 153(4) EPC

(43) Date of publication:
**12.06.2024 Bulletin 2024/24**

(21) Application number: **22853058.0**

(22) Date of filing: **02.08.2022**

(51) International Patent Classification (IPC):
***C08C 19/00*** (2006.01) ***C08F 4/44*** (2006.01)
***C08F 8/06*** (2006.01) ***C08F 8/34*** (2006.01)
***C08F 36/04*** (2006.01) ***C08K 3/04*** (2006.01)
***C08K 3/06*** (2006.01) ***C08K 3/36*** (2006.01)
***C08L 15/00*** (2006.01)

(52) Cooperative Patent Classification (CPC):
**C08C 19/00; C08F 4/44; C08F 8/06; C08F 8/34; C08F 36/04; C08K 3/04; C08K 3/06; C08K 3/36; C08L 15/00;** Y02T 10/86

(86) International application number:
**PCT/JP2022/029658**

(87) International publication number:
**WO 2023/013639 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.08.2021 JP 2021128526**

(71) Applicant: **ENEOS Materials Corporation**
**Tokyo, 105-7109 (JP)**

(72) Inventor: **SHIN, Kanyou**
**Tokyo 105-0021 (JP)**

(74) Representative: **TBK**
**Bavariaring 4-6**
**80336 München (DE)**

(54) **MODIFIED CONJUGATED DIENE POLYMER AND METHOD FOR PRODUCING SAME, POLYMER COMPOSITION, CROSSLINKED PRODUCT, AND TIRE**

(57) Provided is a modified conjugated diene-based polymer having a structural unit derived from a conjugated diene compound and at least one species selected from the group consisting of a partial structure represented by formula (1) and a partial structure represented by formula (2). Each of $R^1$ and $R^2$ independently represents a hydrogen atom or a C1 to C20 hydrocarbyl group. $R^3$ represents a C1 to C20 hydrocarbyl group. $Ar^1$ represents an aryl group. X represents an oxygen atom or a sulfur atom. $M^{r+}$ represents a metal ion. n is an integer of 1 to 10. r is an integer of 1 to 4.

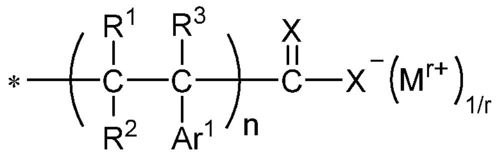

(1)

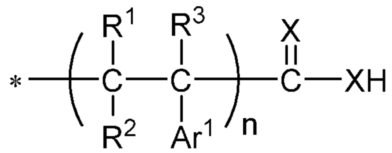

(2)

EP 4 382 542 A1

## Description

Technical Field

[Cross-Reference to Related Applications]

The present application claims the benefit of Japanese Patent Application No. 2021-128526 filed on August 4, 2021, the disclosure of which is incorporated herein by reference.

The present disclosure relates to a modified conjugated diene-based polymer and a method for producing the polymer, to a polymer composition, to a cross-linked product, and to a tire.

Background Art

In recent years, electric automobiles have come to prevail, and good fuel efficiency has more demanded. In view of these trends, there is increasing demand for tire performance, including low rolling resistance and high wear resistance, the demand being more important than ever. In order to meet the demand, development of rubber compositions and polymer materials contained in the rubber compositions is extensively conducted, targeting further lower hysteresis loss, high mechanical strength, and high wear resistance.

One conceivable means for yielding a cross-linked rubber having high mechanical strength and high wear resistance is incorporating an element such as nitrogen, silicon, or oxygen into a main chain and a terminal structure of a polymer forming the rubber (see, for example, Patent Document 1). Patent Document 1 discloses a method for producing a modified conjugated diene-based polymer by a modification group (-COOLi) into a non-polar conjugated diene-based polymer. The disclosed method includes a step of conducing anionic polymerization of a sole conjugated diene compound or a conjugated diene compound with an aromatic vinyl compound, in the presence of an alkali metal compound serving as a polymerization initiator, to thereby form a conjugated diene-based polymer; subsequently, a step of further adding an alkali metal compound to the conjugated diene-based polymer; and a step of reacting the conjugated diene-based polymer with the alkali metal compound, to thereby yield a product, which is caused to be reacted with a modifying agent, to thereby modify the conjugated diene-based polymer with carboxylic acid.

Prior Art Document

Patent Document

Patent Document 1: WO 2019/045053

Summary of Invention

Technical Problem

However, the present inventors previously investigated the above-disclosed production method, and found that gelation of polymer readily occurred in production of the modified conjugated diene-based polymer through the method disclosed in Patent Document 1. Thus, difficulty is encountered in producing a cross-linked rubber by use of the modified conjugated diene-based polymer obtained through the method disclosed in Patent Document 1. Thus, the production method can stand for further improvement.

The present disclosure has been made in order to solve the above problem. Thus, an object of the disclosure is to yield a modified conjugated diene-based polymer which exhibits high mechanical strength and excellent wear resistance, while gelation during production of the polymer is suppressed.

Solution to Problem

In view of the foregoing, the present inventors have thought that problematic gelation occurring in a conventional polymer synthesis may conceivably be caused by nucleophilic attack of another modification group to the modification group incorporated into the polymer, to thereby evoke bonding between the modification groups. Thus, the present inventors have conducted extensive studies from the above viewpoint, and have found that the aforementioned problem can be solved by incorporating a particular structure into the polymer. Accordingly, the present disclosure provides a modified conjugated diene-based polymer and a method for producing the same, a polymer composition, a cross-linked product, and a tire, which will be described below.

[1] A modified conjugated diene-based polymer having a structural unit derived from a conjugated diene compound, and at least one species selected from the group consisting of a partial structure represented by formula (1) and a partial structure represented by formula (2):

[F1]

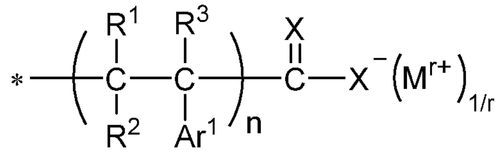

(1)

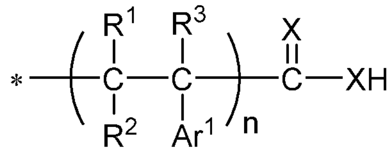

(2)

(In formulas (1) and (2), each of $R^1$ and $R^2$ independently represents a hydrogen atom or a C1 to C20 hydrocarbyl group; $R^3$ represents a C1 to C20 hydrocarbyl group; $Ar^1$ represents an aryl group; X represents an oxygen atom or a sulfur atom; $M^{r+}$ represents a metal ion; n is an integer of 1 to 10; when a plurality of $R^1$, $R^2$, $R^3$, and $Ar^1$ are present in any of formulas (1) and (2), the plurality of $R^1$, $R^2$, $R^3$, and $Ar^1$ are each identical to or different from one another; r is an integer of 1 to 4; and "*" represents an atomic bond).

[2] A method for producing a modified conjugated diene-based polymer, the method including a step of adding an alkali metal compound to a polymer solution containing a conjugated diene-based polymer; a step of adding a compound represented by formula (3):

[F2]

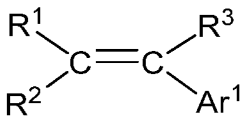

(3)

(In formula (3), each of $R^1$ and $R^2$ independently represents a hydrogen atom or a C1 to C20 hydrocarbyl group; $R^3$ represents a C1 to C20 hydrocarbyl group; and $Ar^1$ represents an aryl group),
to the polymer solution to which the alkali metal compound has been added; and a step of adding one or both of carbon dioxide and carbon disulfide to a reaction system to which the compound represented by formula (3) has been added.

[3] A polymer composition containing a modified conjugated diene-based polymer produced from a modified conjugated diene-based polymer of [1] above or through a production method of [2] above, and at least one species selected from the group consisting of silica and carbon black.

[4] A cross-linked product produced by applying a polymer composition of [3] above.

[5] A tire having a tread and a sidewall, and one or both of them is formed by applying the polymer composition of [3] above.

Advantageous Effects of Invention

The modified conjugated diene-based polymer of the present disclosure is produced in a production process in which gelation is suppressed, and exhibits high mechanical strength and excellent wear resistance. According to the production method of the present disclosure, a modified conjugated diene-based polymer which exhibits high mechanical strength and excellent wear resistance can be produced, while gelation during production of the polymer is suppressed.

Description of Embodiments

Hereinafter, modes for carrying out the present disclosure will be described in detail. In the present specification, a numerical range expressed with "X to Y" refers to a range defined by X as a lower limit and Y as an upper limit, the

lower and upper limits being inclusive in the range.

<<Modified conjugated diene-based polymer [A]>>

The modified conjugated diene-based polymer of the present disclosure (hereinafter may also be referred to as "modified conjugated diene-based polymer [A]") has a structural unit derived from a conjugated diene compound, and at least one species selected from the group consisting of a partial structure represented by formula (1) and a partial structure represented by formula (2) (hereinafter any of the partial structure may also be referred to as a "particular structure":

[F3]

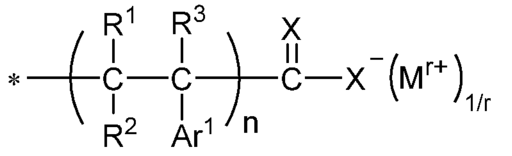

(1)

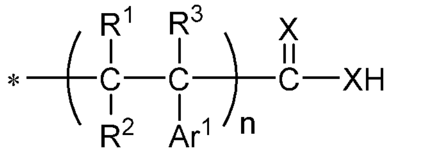

(2)

(In formulas (1) and (2), each of $R^1$ and $R^2$ independently represents a hydrogen atom or a C1 to C20 hydrocarbyl group; $R^3$ represents a C1 to C20 hydrocarbyl group; $Ar^1$ represents an aryl group; X represents an oxygen atom or a sulfur atom; $M^{r+}$ represents a metal ion; n is an integer of 1 to 10; when a plurality of $R^1$, $R^2$, $R^3$, and $Ar^1$ are present in any of formulas (1) and (2), the plurality of $R^1$, $R^2$, $R^3$, and $Ar^1$ are each identical to or different from one another; r is an integer of 1 to 4; and "*" represents a atomic bond).

As used herein, the term "modification" refers to impartment of a partial structure containing a hetero atom (e.g., nitrogen, oxygen, sulfur, or silicon) to an unmodified conjugated diene-based polymer formed of a structural unit derived from hydrocarbon. The mode of modification includes, for example, terminal modification in which a hetero atom-containing partial structure is incorporated into a polymerization initiating terminal or a polymerization completed terminal of a conjugated diene-based polymer; and a main chain modification in which a hetero atom-containing partial structure is incorporated into a main chain of a conjugated diene-based polymer by co-polymerizing a hetero atom-containing monomer or by reacting the conjugated diene-based polymer with a modifying agent. When a hetero atom-containing partial structure is incorporated into a main chain of a conjugated diene-based polymer by reacting the conjugated diene-based polymer with a modifying agent, the hetero atom-containing partial structure is incorporated into a side chain of the polymer. That is, the hetero atom-containing partial structure is present in a side chain. The term "modified conjugated diene-based polymer" refers to a conjugated diene-based polymer which has been modified. The modified conjugated diene-based polymer may be formed through modification reaction in the course of polymerization reaction (e.g., start of polymerization or in the course of polymerization), or through polymerization termination reaction as a modification reaction. Alternatively, the modified conjugated diene-based polymer may also be formed through modification reaction of a (modified) conjugated diene-based polymer which has been produced via polymerization. The term "modifying agent" refers to a chemical agent that can evoke modification. The term "(modified) conjugated diene-based polymer" encompasses an un-modified conjugated diene-based polymer and a conjugated diene-based polymer which has been modified (i.e., a modified conjugated diene-based polymer). In the specification, unless otherwise specified as an un-modified state, the description "conjugated diene-based polymer" may be a modified conjugated diene-based polymer or an unmodified conjugated diene-based polymer.

In the aforementioned formulas (1) and (2), the hydrocarbyl group represented by $R^1$, $R^2$, or $R^3$ is preferably a C1 to C20 linear-chain or branched alkyl group, a C3 to C20 cycloalkyl group, or a C6 to C20 aryl group. Among them, the hydrocarbyl group represented by $R^1$, $R^2$, or $R^3$ is preferably a C1 to C10 linear-chain or branched alkyl group, a C3 to C12 cycloalkyl group, or a C6 to C12 aryl group.

Examples of the aryl group represented by $Ar^1$ include a phenyl group, a methylphenyl group, an ethyl phenyl group, and a dimethylphenyl group. Among them, $Ar^1$ is preferably a phenyl group or a methylphenyl group.

The parameter "n" represents the number of repetitions of "-($CR^1R^2$-$CR^3Ar^1$)-" in one particular structure included in modified conjugated diene-based polymer [A]. The value "n" is preferably 1 to 5, more preferably 1 to 3.

The "n" may be determined as an average value of the number of repetitions of "$-(CR^1R^2-CR^3Ar^1)-$" belonging to each of the entire particular structures included in modified conjugated diene-based polymer [A]. The averaged value corresponds to the average chain length (hereinafter may also be referred to as "$L_{av}$") of a structural unit derived from a compound represented by formula (3) (as mentioned below) present in each of the particular structures included in modified conjugated diene-based polymer [A], which is a mass of the relevant molecules. The average chain length ($L_{av}$) is calculated through $^1$H-NMR and $^{13}$C-NMR employing inverse-gated-decoupling. More specifically, $L_{av}$ is calculated through $^1$H-NMR measurement of a sample of the conjugated diene-based polymer before incorporation of a particular structure and $^1$H-NMR measurement and $^{13}$C-NMR measurement employing inverse-gated-decoupling of a sample of the modified conjugated diene-based polymer after incorporation of the particular structure. The calculation method is in accordance with the below-described method in the Examples.

X represents an oxygen atom or a sulfur atom. From the viewpoint of handling of a modifying agent employed in incorporation of a particular structure into a conjugated diene-based polymer, X is preferably an oxygen atom.

Examples of $M^{r+}$ include alkali metal ions (e.g., $Li^+$, $Na^+$, and $K^+$), alkaline earth metal ions (e.g., $Be^{2+}$, $Mg^{2+}$, $Ca^{2+}$, $Sr^{2+}$, and $Ba^{2+}$), ions of group 3 to group 12 metal elements (Sc to Hg), ions of group 13 elements (Al to In), a germanium ion, a tin ion, an antimony and a bismuth ion. Among them, $M^{r+}$ is preferably an ion selected from the group consisting of an alkali metal ion, an alkaline earth metal ion, a zinc ion, an aluminum ion, and an iron ion.

The value of "r" is preferably 1 to 3.

The atomic bond (*) in formulas (1) and (2) is preferably an atomic bond which bonds to a carbon atom forming a main chain of the polymer. In other words, preferably, the particular structure is directly bonded to a main chain of the polymer. Any of the carbon atoms forming the main chain of the polymer may be present in a terminal portion of the polymer main chain or at a position different from the terminal portion (i.e., at a position which allows the particular structure to be incorporated into a side chain of the polymer). The particular structure present in modified conjugated diene-based polymer [A] may be incorporated into a side chain of the polymer in such a manner that the atomic bond (*) in formula (1) or (2) is bonded to a carbon atom forming a main chain of the polymer or into a terminal of the polymer. Alternatively, the particular structure may be incorporated into each of a polymer side chain and a polymer terminal. Among these modes of incorporation, the particular structure is preferably incorporated into at least a polymer side chain, from the viewpoint of yielding a cross-linked product of excellent mechanical strength and wear resistance. As used herein, the term "main chain" of a polymer refers to the longest "trunk" among the polymer atomic chains. The term "side chain" of a polymer refers to a part branched from the trunk of the polymer.

The number of the particular structures incorporated into one molecule of modified conjugated diene-based polymer [A] is preferably 1.0 to 200. When the number of the particular structures incorporated into one molecule of modified conjugated diene-based polymer [A] falls within the above range, advantageously, a polymer (in turn, a cross-linked rubber) having higher mechanical strength and higher wear resistance can be produced, while gelation in production of the polymer is suppressed. From the viewpoint of yielding a polymer having high mechanical strength and high wear resistance, the number of the particular structures incorporated into one molecule of modified conjugated diene-based polymer [A] is more preferably 1.2 or more, still more preferably 1.5 or more, yet more preferably 1.7 or more, further more preferably 5.0 or more. Also, from the viewpoint of fully suppressing gelation in production of a polymer, the number of the particular structures incorporated into one molecule of modified conjugated diene-based polymer [A] is more preferably 100 or less, still more preferably 50 or less.

The number ($N_{COOH}$) of the particular structures incorporated into one molecule of modified conjugated diene-based polymer [A] is a value calculated through $^1$H-NMR and $^{13}$C-NMR employing inverse-gated-decoupling. In a specific procedure, the number ($M_{vi}$) of 1,2-vinyl groups present in one molecule of modified conjugated diene-based polymer [A] is calculated from the amounts of monomers and polymerization initiator in polymerization and $^1$H-NMR measurements of modified conjugated diene-based polymer [A]. Through $^{13}$C-NMR employing inverse-gated-decoupling, a signal at about 114 ppm attributed to a $=CH_2$ moiety of a 1,2-vinyl group, and a signal at about 180 ppm attributed to a (C=O) moiety of a carboxy group or a signal at about 240 ppm attributed to a (C=S) moiety of a dithiocarboxy group are determined, to thereby calculate an intensity ratio $C_{COOH}$. The thus-obtained parameters $M_{vi}$ and $C_{COOH}$ are input to the following numerical formula (I):

$$N_{COOH} = C_{COOH} \times M_{vi} \quad \cdots \quad (I),$$

to thereby obtain the number ($N_{COOH}$). The specific calculation procedure is based on the method disclosed in the Examples below.

Modified conjugated diene-based polymer [A] may be any polymer having a structural unit derived from a conjugated diene compound. Examples of the conjugated diene compound include 1,3-butadiene, isoprene, 2,3-dimethyl-1,3-butadiene, 1,3-pentadiene, 1,3-hexadiene, 1,3-heptadiene, 2-phenyl-1,3-butadiene, 3-methyl-1,3-pentadiene, and 2-chloro-1,3-butadiene. Among them, at least one species selected from the group consisting of 1,3-butadiene, isoprene,

and 2,3-dimethyl-1,3-butadiene is preferred, with at least one of 1,3-butadiene and isoprene being more preferred. The structural units derived from a conjugated diene compound included in modified conjugated diene-based polymer [A] may be used singly or in combination of two or more species.

Modified conjugated diene-based polymer [A] may be a homopolymer of a conjugated diene compound, or may have a structural unit derived from a conjugated diene compound and a structural unit derived from an aromatic vinyl compound.

Examples of the aromatic vinyl compound include styrene, 2-methylstyrene, 3-methylstyrene, 4-methylstyrene, α-methylstyrene, 2,4-dimethylstyrene, 2,4-diisopropylstyrene, 4-t-butylstyrene, 5-t-butyl-2-methylstyrene, vinylethylbenzene, divinylbenzene, trivinylbenzene, divinylnaphthalene, t-butoxystyrene, vinylbenzyldimethylamine, (4-vinylbenzyl) dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, vinylxylene, vinylnaphthalene, vinylpyridine, diphenylethylene, and tert-amino group-containing diphenylethylene (e.g., 1-(4-N,N-dimethylaminophenyl)-1-phenylethylene).

The aromatic vinyl compound forming modified conjugated diene-based polymer [A] is preferably a compound represented by formula (4).

[F4]

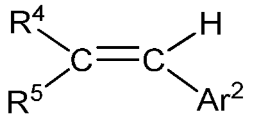

(4)

(In formula (4), each of $R^4$ and $R^5$ independently represents a hydrogen atom or a C1 to C20 hydrocarbyl group; and $Ar^2$ represents an aryl group.)

In formula (4), specific examples and examples of preferred groups of the C1 to C20 hydrocarbyl group represented by $R^4$ or $R^5$ are the same as those referred in relation to the C1 to C20 hydrocarbyl group represented by any of $R^1$ to $R^3$ in formulas (1) and (2). Specific examples and examples of preferred groups of the aryl group represented by $Ar^2$ are the same as those referred to in relation to the aryl group represented by $Ar^1$ in formulas (1) and (2).

Particularly preferably, the aromatic vinyl compound forming modified conjugated diene-based polymer [A] is at least one of styrene and 4-methylstyrene, corresponding to the compound represented by formula (4).

When modified conjugated diene-based polymer [A] is a copolymer of a conjugated diene compound and an aromatic vinyl compound, the relative amount of the structural unit derived from an aromatic vinyl compound in modified conjugated diene-based polymer [A] is preferably more than 0 mass% to 40 mass% or less, with respect to the entirety of structural units forming modified conjugated diene-based polymer [A]. When the relative amount falls within the above range, advantageously, a polymer (in turn, a cross-linked rubber) having higher mechanical strength and higher wear resistance can be produced, while processability of the polymer composition is improved. From that viewpoint, the relative amount of the structural unit derived from an aromatic vinyl compound is more preferably 5 mass% or more with respect to the entirety of structural units forming the modified conjugated diene-based polymer [A], still more preferably 10 mass% or more. Also, the relative amount of the structural unit derived from an aromatic vinyl compound is more preferably 35 mass% or less with respect to the entirety of structural units forming the modified conjugated diene-based polymer [A], still more preferably 30 mass% or less.

The relative amount of the structural unit derived from an aromatic vinyl compound in the polymer is a value determined through $^1$H-NMR. The structural units derived from an aromatic vinyl compound present in modified conjugated diene-based polymer [A] may be used singly or in combination of two or more species.

From the viewpoint of further enhancement of the fuel efficiency of the cross-linked product obtained by use of modified conjugated diene-based polymer [A], modified conjugated diene-based polymer [A] preferably has one or more functional groups selected from the group consisting of an amino group, a nitrogen-containing heterocyclic group, a phosphino group, a hydroxy group, a thiol group, and a hydrocarbyloxysilyl group, more preferably one or more functional groups selected from the group consisting of an amino group, a nitrogen-containing heterocyclic group, and a hydrocarbyloxysilyl group. Particularly preferably, any of these functional groups is incorporated into at least a terminal of modified conjugated diene-based polymer [A], from the viewpoint of high effect of improving fuel efficiency.

<<Method for producing modified conjugated diene-based polymer [A]>>

Modified conjugated diene-based polymer [A] can be produced through a method including the following first step, second step, and third step.

First step: a step of adding an alkali metal compound to a polymer solution containing a conjugated diene-based

polymer (hereinafter may also be referred to as "polymer solution D").

Second step: a step of adding a compound represented by formula (3) (hereinafter may also be referred to as "compound ST") to polymer solution D to which the alkali metal compound has been added in the first step;

Third step: a step of adding one or both of carbon dioxide and carbon disulfide to a reaction system to which compound ST has been added.

[F5]

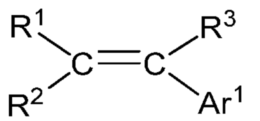

(3)

(In formula (3), each of $R^1$, $R^2$, $R^3$, and $Ar^1$ has the same meaning as defined in formulas (1) and (2).)

<First step>

In the above production method, polymer solution D contains a conjugated diene-based polymer and a solvent. Examples of the conjugated diene-based polymer contained in polymer solution D include a conjugated diene-based polymer produced in the below-described polymerization step, and a conjugated diene-based polymer produced in the below-described polymerization step and modification step. Specific examples of these polymers include an terminal-unmodified polymer in which both terminals of the conjugated diene-based polymer have not been modified; an terminal-modified polymer in which one or both of the terminals of the conjugated diene-based polymer form a covalent bond with silica or which is modified with a compound having an interactive functional group; and a conjugated diene-based polymer having an active terminal.

As used herein, the term "interaction" refers to generation of intermolecular force which is weaker than a covalent bond (e.g., intermolecular electromagnetic force such as ion-dipole interaction, dipole-dipole interaction, hydrogen bond, or Van der Waals force). The term "functional group which forms a covalent bond with silica or interacts with silica" refers to a group containing at least one element which interacts with silica, such as nitrogen, sulfur, phosphorus, and oxygen. The term "active terminal" refers to a moiety which presents at a terminal of a molecular chain and which is a moiety other than a structure derived from a monomer having a carbon-carbon double bond. Thus, "active terminal" refers to a growth terminal of polymerization reaction (more specifically, a metal terminal).

(Polymerization step)

The polymerization step of the present disclosure is a step of polymerizing a monomer including a conjugated diene compound, to thereby yield a conjugated diene-based polymer. Examples of the conjugated diene compound employed in the polymerization include the conjugated diene compounds as exemplified as above. Among them, the conjugated diene compound is preferably at least one species selected from the group consisting of 1,3-butadiene, isoprene, and 2,3-dimethyl-1,3-butadiene, with one of 1,3-butadiene and isoprene being more preferred.

When modified conjugated diene-based polymer [A] is a copolymer having a structural unit derived from a conjugated diene compound and a structural unit derived from an aromatic vinyl compound, examples of the aromatic vinyl compound involved in polymerization include the aromatic vinyl compounds as exemplified above. The aromatic vinyl compound employed in polymerization is preferably a compound represented by formula (4), more preferably at least one of styrene and 4-methylstyrene.

When modified conjugated diene-based polymer [A] is a copolymer of a conjugated diene compound and an aromatic vinyl compound, the copolymer preferably has a random copolymerization segment having an irregular distribution of the conjugated diene compound and the aromatic vinyl compound, from the viewpoint of further enhancement of dispersibility of filler. When modified conjugated diene-based polymer [A] is a random copolymer of a conjugated diene compound and an aromatic vinyl compound, the copolymer may further include a block segment of the conjugated diene compound or the aromatic vinyl compound, in addition to the random copolymerization segment. When modified conjugated diene-based polymer [A] is a copolymer of a conjugated diene compound and an aromatic vinyl compound, the copolymer is preferably formed of monomers including, among others, 1,3-butadiene and styrene, from the viewpoint of high living performance in anionic polymerization. A preferred range of the relative amount of a structural unit derived from an aromatic vinyl compound in modified conjugated diene-based polymer [A] is the same as mentioned above.

The monomers used in polymerization for yielding modified conjugated diene-based polymer [A] may include a compound other than a conjugated diene compound and an aromatic vinyl compound (hereinafter may also be referred to as an "additional monomer"). Examples of the additional monomer include acrylonitrile, methyl (meth)acrylate, and

ethyl (meth)acrylate. The amount of the additional monomer(s) employed is preferably 10 mass% or less, more preferably 5 mass% or less, with respect to the entire amount of the monomers involved in polymerization.

The method which is employed may be any of solution polymerization, gas phase polymerization, and bulk polymerization. Among them, the polymerization employed is particularly preferably solution polymerization. Also, the polymerization method may be performed in a batch manner or in a continuous manner. When solution polymerization is employed, one specific procedure includes polymerization of monomers including a conjugated diene compound in a solvent (preferably an organic solvent) in the presence of a polymerization initiator and an optional vinyl content modulating agent (hereinafter may also be referred to as a "randomizer").

As the polymerization initiator, a metal compound containing an alkali metal or an alkaline earth metal may be used. Among such metal compounds, an alkali metal-containing compound is preferred. Specific examples of the metal compound include alkyllithiums such as methyllithium, ethyllithium, n-propyllithium, n-butyllithium, sec-butyllithium, and t-butyllithium; and 1,4-dilitiobutane, phenyllithium, stilbenelithium, naphthyllithium, 1,3-bis(1-lithio-1,3-dimethylpentyl)benzene, 1,3-phenylenebis(3-methyl-1-phenylpentylidene)dilithium, naphthylsodium, naphthylpotassium, and ethoxypotassium. Among them, the polymerization initiator is preferably a lithium compound.

Alternatively, the metal compound used as the polymerization initiator may be a metal amide compound containing an alkali metal or an alkaline earth metal. When polymerization for forming modified conjugated diene-based polymer [A] is conducted in the presence of a metal amide compound, a polymer which has a particular structure and a polymerization initiating terminal to which an amino group has been incorporated can be produced as modified conjugated diene-based polymer [A]. A specific product of modified conjugated diene-based polymer [A] produced through a method including a step of polymerization in the presence of a metal amide compound is preferred, from the viewpoint of further enhancement of dispersibility of filler.

Among metal amide compounds, a compound obtained by mixing a lithium compound (e.g., alkyllithium) with a compound containing a nitrogen atom (hereinafter may also be referred to as an "initiating terminal modifying agent") is preferred. The initiating terminal modifying agent is preferably a secondary amine compound. Specific examples include dimethylamine, diethylamine, dipropylamine, dibutylamine, dodecamethylenimine, N,N'-dimethyl-N'-trimethylsilyl-1,6-diaminohexane, piperidine, pyrrolidine, hexamethylenimine, heptamethylenimine, dicyclohexylamine, N-methylbenzylamine, di-(2-ethylhexyl)amine, diallylamine, morpholine, N-(trimethylsilyl)piperazine, N-(tertbutyldimethylsilyl)-4-piperazine, and 1,3-ditrimethylsilyl-1,3,5-triazinane. Through incorporation of any of these compounds, a nitrogen-containing group such as an amino group or a nitrogen-containing heterocyclic group can be incorporated into a terminal of a polymer.

When polymerization is conducted in the presence of a metal amide compound, a lithium compound and an initiating terminal modifying agent may be mixed together in advance, to thereby prepare a metal amide compound, and the thus-prepared metal amide compound may be added to the polymerization system for conducting polymerization. Alternatively, both a lithium compound and an initiating terminal modifying agent may be added to the polymerization system, and the two components may be mixed in the polymerization system, to thereby prepare a metal amide compound for conducting polymerization.

In the above polymerization, the amount of polymerization initiator (the total amount, when two or more species are used) is preferably 0.01 to 20 mmol, more preferably 0.05 to 15 mmol, with respect to 100 g of the monomer involved in synthesis of the polymer. Such polymerization initiators may be used singly or in combination of two or more species.

The randomizer may be used for the purpose of adjusting the vinyl content (i.e., 1,2-vinyl group content of a polymer) and other reasons. Examples of the randomizer include dimethoxybenzene, tetrahydrofuran, dimethoxyethane, diethylene glycol dibutyl ether, diethylene glycol dimethyl ether, 2,2-di(tetrahydrofuryl)propane, 2-(2-ethoxyethoxy)-2-methylpropane, triethylamine, pyridine, N-methylmorpholine, and tetramethylethylenediamine. These randomizers may be used singly or in combination of two or more species.

As the organic solvent employed in polymerization, an organic solvent which is not involved in polymerization reaction is preferably used. Specific examples of the organic solvent employed in polymerization include an aliphatic hydrocarbon, an alicyclic hydrocarbon, and an aromatic hydrocarbon. Among them, a C3 to C8 hydrocarbon is preferred. Specific examples include propane, n-butane, isobutane, n-pentane, isopentane, n-hexane, cyclohexane, propene, 1-butene, isobutene, trans-2-butene, cis-2-butene, 1-hexane, 2-hexane, benzene, toluene, xylene, ethylbenzene, heptane, cyclopentane, methylcyclopentane, methylcyclohexane, 1-pentene, 2-pentene, and cyclohexane. These organic solvents may be used singly or in combination of two or more species.

When solution polymerization is conducted, the monomer concentration of the reaction solvent is preferably 5 to 50 mass%, more preferably 10 to 30 mass%, from the viewpoint of maintaining the facility in productivity and controlling polymerization and attaining the balance therebetween. The temperature of polymerization reaction is preferably -20°C to 150°C, more preferably 0 to 120°C. Also, the polymerization reaction is preferably conducted at such a pressure sufficiently maintaining the monomers substantially in a liquid phase. Such pressure can be achieved through, for example, a method including pressurizing a reactor with a gas which is not involved in polymerization reaction. Through such polymerization reaction, a conjugated diene-based polymer having an active terminal can be yielded.

In the conjugated diene-based polymer obtained through the aforementioned polymerization step, the vinyl content of the structural unit derived from 1,3-butadiene is preferably 3 to 70 mol%. By adjusting the vinyl content to be 3 mol% or more, the produced cross-linked rubber generally has consistent flexibility, suitable processability, and excellent wear resistance. In the case of a polymer further having a structural unit derived from an aromatic vinyl compound as modified conjugated diene-based polymer [A], the vinyl content of the conjugated diene-based polymer is preferably 10 mol% or more, more preferably 15 mol% or more, still more preferably 25 mol% or more. Also, from the viewpoint of wear resistance, the vinyl content of the conjugated diene-based polymer obtained through the aforementioned polymerization step is preferably 68 mol% or less, more preferably 65 mol% or less. As used herein, the term "vinyl content" refers to a ratio of a structural unit having a 1,2-bond contained in the (modified) conjugated diene-based polymer to the entirety of structural units derived from 1,3-butadiene. The ratio is determined by means of a $^1$H-NMR apparatus.

In the first step, when polymer solution D containing a conjugated diene-based polymer produced through the aforementioned polymerization reaction is used, the conjugated diene-based polymer may be a conjugated diene-based polymer having an active terminal. Alternatively, polymer solution D may be prepared by terminating polymerization reaction by use of, for example, an alcohol (e.g., methanol, 2-propanol, or octanol) as a polymerization terminator and using the conjugated diene-based polymer formed through the termination reaction. In that case, by use of, for example, an alkyllithium compound (e.g., n-butyllithium) as a polymerization initiator, polymer solution D containing a conjugated diene-based polymer having an unmodified terminal may be prepared. Yet alternatively, by use of an initiating terminal modifying agent in polymerization reaction, there can be prepared polymer solution D containing a terminal-modified conjugated diene-based polymer in which one terminal (i.e., the polymerization initiating terminal of the polymer) has been modified with a compound having a functional group that can interact with silica.

(Modification step)

In the modification step of the present disclosure, the active terminal of the conjugated diene-based polymer obtained through the aforementioned polymerization procedure is caused to react with an end terminal modifying agent, to thereby modify the polymerization completed terminal of the conjugated diene-based polymer.

As the end terminal modifying agent, there is preferably used a compound which has at least one element selected from the group consisting of nitrogen, phosphorus, oxygen, sulfur, and silicon and which can react with the active terminal of the conjugated diene-based polymer obtained through the aforementioned polymerization procedure. In that case, there can be formed a modified conjugated diene-based polymer having, at a terminal, at least one element selected from the group consisting of nitrogen, phosphorus, oxygen, sulfur, and silicon.

As the end terminal modifying agent, there is preferably used a compound that can incorporate, into a terminal of the polymer, one or more functional groups selected from the group consisting of an amino group, a nitrogen-containing heherocyclic group, a phosphino group, a hydroxy group, a thiol group, and a hydrocarbyloxysilyl group. Specific examples of preferred end terminal modifying agents include compounds represented by the following formula (5) or (6).

[F6]

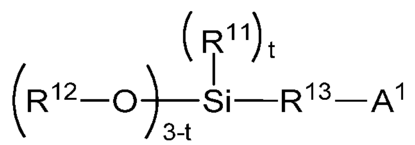

(5)

(In formula (5), $A^1$ represents a monovalent functional group which has at least one element selected from the group consisting of nitrogen, phosphorus, oxygen, sulfur, and silicon, but no active hydrogen and which bonds to $R^{13}$ via a nitrogen atom, a phosphorus atom, an oxygen atom, a sulfur atom, a silicon atom, or a carbon atom included in a carbonyl group, or represents a (thio)epoxy group; each of $R^{11}$ and $R^{12}$ independently represents a hydrocarbyl group; $R^{13}$ represents a hydrocarbylene group; t is an integer of 0 to 2; when t is 2, a plurality of $R^{11}$s in the formula are identical to or different from one another; and when the value of t is 0 or 1, a plurality of $R^{12}$s in the formula are different from one another.)

[F7]

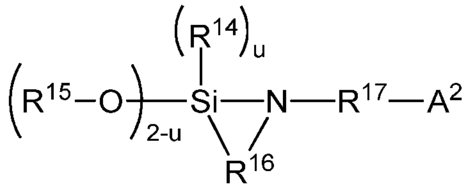

(6)

(In formula (6), $A^2$ represents a monovalent functional group which has at least one element selected from the group consisting of nitrogen, phosphorus, oxygen, sulfur, and silicon, but no active hydrogen and which bonds to $R^{17}$ via a nitrogen atom, a phosphorus atom, an oxygen atom, a sulfur atom, or a silicon, or represents a C1 to C20 hydrocarbyl group; each of $R^{14}$ and $R^{15}$ independently represents a hydrocarbyl group; $R^{16}$ represents a hydrocarbylene group; $R^{17}$ represents a single bond or a hydrocarbylene group; u is 0 or 1; and when u is 0, a plurality of $R^{15}$s in the formula are identical to or different from one another.)

In the above formulas (5) and (6), regarding $R^{11}$, $R^{12}$, $R^{14}$, $R^{15}$, and $A^1$ (when it is a hydrocarbyl group), the hydrocarbyl group is preferably a C1 to C20 linear-chain or branched alkyl group, a C3 to C20 cycloalkyl group, or a C6 to C20 aryl group.

The hydrocarbylene group represented by $R^{13}$, $R^{16}$, or $R^{17}$ is preferably a C1 to 20 linear-chain or branched alkanediyl group, a C3 to C20 cycloalkylene group, or a C6 to C20 arylene group.

The value of "t" is preferably 0 or 1, and "u" is preferably 0.

The at least one element selected from the group consisting of nitrogen, phosphorus, oxygen, sulfur, and silicon present in $A^1$ (when $A^1$ is the aforementioned monovalent functional group) or the at least one element selected from the group consisting of nitrogen, phosphorus, oxygen, sulfur, and silicon present in $A^2$ (when $A^2$ is the aforementioned monovalent functional group) may be protected by, for example, a tri-substituted hydrocarbylsilyl group. As used herein, the term "active hydrogen" refers to a hydrogen atom which bonds to an atom other than a carbon atom. Preferably, the bond energy is lower than that of a carbon-hydrogen bond of polymethylene. The term "(thio)epoxy group" encompasses an epoxy group and a thioepoxy group.

$A^1$ may be a group which can form an onium ion by an onium salt-forming agent. When the end terminal modifying agent has such a group ($A^1$), the polymer can be provided with an excellent shape-maintaining property. As used herein, the term "onium salt-forming agent" refers to a Broensted acid or a compound which forms a Broensted acid upon contact with water.

Specific examples of $A^1$ include a nitrogen-containing group derived from a primary amino group by substituting two hydrogen atoms with two protective groups; a nitrogen-containing group derived from a secondary amino group by substituting one hydrogen atom with one protective group; a tertiary amino group; an imino group; a pyridyl group; a phosphorus-containing group derived from a primary phosphino group by substituting two hydrogen atoms with two protective groups; a phosphorus-containing group derived from a secondary phosphino group by substituting one hydrogen atom with one protective group; a tertiary phosphino group; an epoxy group; a thioepoxy group; a group derived from a hydroxy group by substituting the hydrogen with a protective group; a sulfur-containing group derived from a thiol group by substituting the hydrogen with a protective group; and a hydrocarbyloxycarbonyl group. Among them, from the viewpoint of good affinity with silica, a nitrogen-containing group is preferred, with a tertiary amino group and a nitrogen-containing group derived from a primary amino group by substituting two hydrogen atoms with two protective groups being more preferred. The term "protective group" refers to a functional group which can transform $A^1$ or $A^2$ to a group inert to a polymerization active terminal.

Specific examples of the end terminal modifying agent include, as compounds represented by formula (5), N,N-bis(trimethylsilyl)aminopropyltrimethoxysilane, N,N-dimethylaminopropyltriethoxysilane, N,N-bis(trimethylsilyl)aminopropylmethyldimethoxysilane, dimethylaminopropyltrimethoxysilane, diethyl aminopropyltrimethoxysilane, N,N-bis(trimethylsilyl)aminopropylmethyldiethoxysilane, N,N',N'-tris(trimethylsilyl)-N-(2-aminoethyl)-3-aminopropyltriethoxysilane, 3-(4-trimethylsilyl-1-piperazinno)propylmethyldimethoxysilane, 3-glycidoxypropylmethyldimethoxysilane, and 3-glycidoxypropyltriethoxysilane.

Specific examples of the compound represented by formula (6) include 2,2-dimethoxy-1-(3-trimethoxysilylpropyl)-1,2-azasilolydine, 2,2-diethoxy-1-(3-trimethoxysilylpropyl)-1,2-azasilolydine, 2,2-dimethoxy-1-phenyl-1,2-azasilolydine, 1-trimethylsilyl-2,2-dimethoxy-1-aza-2-silacyclopentane, 2-(2,2-dimethoxy-1,2-azasilolydin-1-yl)-N,N-diethylethan-1-amine, 2-(2,2-dimethoxy-1,2-azasilolydin-1-yl)-N,N-dimethylethan-1-amine, and 3-(2,2-dimethoxy1,2-azasilolydin-1-yl)-N,N-diethylpropan-1-amine. These end terminal modifying agents may be used singly or in combination of two or more species.

The reaction between the conjugated diene-based polymer having an active terminal and the end terminal modifying agent (i.e., terminal modification reaction) may be conducted as a solution-format reaction. The solution-format

reaction may be conducted in a batch manner or in a continuous manner. In this case, no particular limitation is imposed on the method of adding the end terminal modifying agent. Examples of the addition method include a one-batch addition, a divided addition, and a continuous addition.

The amount of the end terminal modifying agent to be used may be appropriately set in accordance with the type of the compound(s) employed in the reaction. The amount is preferably 0.05 mol or more with respect to 1 mol of metal atoms present in the polymerization initiator involved in the polymerization reaction, more preferably 0.1 mol or more. By tuning the amount of the end terminal modifying agent to be used to 0.1 mol equivalents or more, modification reaction can be sufficiently proceeded, whereby dispersibility of fillers can be suitably improved. Also, the amount of the end terminal modifying agent is preferably 1.0 mol or less with respect to 1 mol of metal atoms present in the polymerization initiator involved in the polymerization reaction, more preferably 0.8 mol or less.

The temperature of terminal modification reaction is generally the same as the temperature of polymerization reaction, preferably -20 to 150°C, more preferably 0 to 120°C, still more preferably 20 to 100°C. When the modification reaction temperature is low, the viscosity of the polymer solution tends to increase, whereas when the terminal modification reaction temperature is high, a polymerization active terminal is readily deactivated. The time of terminal modification reaction is preferably 1 minute to 5 hours, more preferably 2 minutes to 1 hour.

In production of the conjugated diene-based polymer, an active terminal of the conjugated diene-based polymer may be reacted with a coupling agent for e.g., enhancing the Mooney viscosity and cold flow characteristics of the polymer. The reaction by use of the coupling agent may be performed before or after the reaction between the polymerization active terminal and the end terminal modifying agent. Alternatively, the reaction may be performed simultaneously with the reaction between the polymerization active terminal and the end terminal modifying agent. Specific examples of the coupling agent include 2,4-tolylene diisocyanate, diphenylmethane diisocyanate, N,N,N',N'-tetramethylphthalamide, N,N,N',N'-tetramethyl-4,4'-diaminobenzophenone, tin tetrachloride, and silicon tetrachloride.

In the first step, the reaction mixture obtained in the aforementioned polymerization step or modification step as is may be employed as polymer solution D. Alternatively, the conjugated diene-based polymer contained in the reaction mixture obtained in the aforementioned polymerization step or modification step may be isolated, and the isolated conjugated diene-based polymer may be dissolved in a solvent, to thereby prepare polymer solution D. In the case where the conjugated diene-based polymer contained in the reaction mixture is isolated, a known solvent removal method (e.g., steam stripping), drying (e.g., a thermal treatment), etc. may be employed. When the reaction mixture obtained in the aforementioned polymerization step or modification step is employed as polymer solution D without any further treatment, the production steps for modified conjugated diene-based polymer [A] can be simplified, to thereby advantageously enhance productivity.

Also, in the first step, a solution prepared by dissolving a commercial product of the conjugated diene-based polymer in a solvent may be used as polymer solution D. In this case, no particular limitation is imposed on the type of the conjugated diene-based polymer. Examples of the conjugated diene-based polymer include styrene-butadiene rubber (SBR), butadiene rubber (BR, such as high cis BR having a cis-1,4-bond content of ≥90% or syndiotactic 1,2-polybutadiene (SPB)-containing BR), isoprene rubber (IR), styrene-isoprene copolymer rubber, and butadiene-isoprene copolymer rubber.

The weight average molecular weight (Mw) (as reduced to polystyrene) of the conjugated diene-based polymer contained in polymer solution D, which is determined through gel permeation chromatography (GPC), is preferably 30,000 to 2,000,000, from the viewpoints of providing a cross-linked rubber having high mechanical strength and excellent wear resistance and suppression of gelation during polymerization in production thereof. The Mw of the conjugated diene-based polymer is more preferably 40,000 or higher, still more preferably 50,000 or higher. Also, the Mw is more preferably 1,500,000 or lower, still more preferably 1,000,000 or lower. The Mw of the conjugated diene-based polymer is determined from the total peak area of the GPC curve measured through GPC before modification performed in the first to the third steps. The molecular weight is a weight average molecular weight calculated from all the peaks (i.e., total weight average molecular weight). The Mw of the conjugated diene-based polymer contained in polymer solution D does not considerably vary before and after modification performed in the first to the third steps. Thus, the Mw is substantially constant.

The molecular weight distribution (Mw/Mn); i.e., a ratio pf weight average molecular weight (Mw) to number average molecular weight (Mn), of the conjugated diene-based polymer determined through GPC is preferably 4.0 or less, more preferably 3.5 or less, still more preferably 3.0 or less.

In the case where polymer solution D is prepared by dissolving a conjugated diene-based polymer in a solvent, an organic solvent that can dissolve the conjugated diene-based polymer is preferably used. Examples of such an organic solvent include the compounds as exemplified in relation to the organic solvent for use in polymerization. From the viewpoint of achieving reaction efficiency and handling performance in good balance, the polymer concentration of polymer solution D is preferably 2 to 50 mass%, more preferably 5 to 20 mass%.

In the first step, an alkali metal compound is added to polymer solution D. Examples of the alkali metal element present in the alkali metal compound include Li, Na, K, Rb, and Cs. Among them, the alkali metal compound used in

the first step is preferably a lithium compound. Specific examples of the lithium compound include the same compounds as exemplified in relation to the polymerization initiator used in the polymerization reaction of monomers including a conjugated diene compound. Among them, a linear-chain or a branched alkyllithium compound is preferably used, with a branched alkyllithium compound being more preferably used.

When an alkyllithium compound is used as an alkali metal compound added to polymer solution D, any of the same compounds as exemplified in relation to the randomizer used in polymerization reaction (hereinafter may also be referred to as "compound E") may be added to the polymer solution in addition to the lithium compound, for dissolving the lithium compound in the polymer solution. Among such compounds, compound E to be used is preferably at least one species selected from the group consisting of tetrahydrofuran, 2,2-di(tetrahydrofuryl)propane, and tetramethylethylenediamine, with tetramethylethylenediamine being more preferably used.

The amount of the alkali metal compound to be added to polymer solution D is, for example, 0.1 to 50 mmol, with respect to the entire amount of the monomer(s) forming the conjugated diene-based polymer as 100 parts by mass, preferably 0.2 to 20 mmol. These alkali metal compounds may be used singly or in combination of two or more species.

<Second step>

In the second step of the present disclosure, a compound represented by formula (3) is added to polymer solution D after addition of an alkali metal compound conducted in the first step. In the aforementioned formula (3), the same definitions in the aforementioned formulas (1) and (2) are also applied to $R^1$, $R^2$, $R^3$, and $Ar^1$. The compound represented by formula (3) (compound ST) is preferably at least any of $\alpha$-methylstyrene and 1,1-diethylphenylethylene.

The amount of compound ST to be added to polymer solution D is preferably 0.1 to 75 mmol with respect to the entire amount of the monomer(s) forming the conjugated diene-based polymer as 100 parts by mass, more preferably 0.2 to 30 mmol. In the second step, compounds ST may be used singly or in combination of two or more species.

<Third step>

In the third step of the present disclosure, one or both of carbon dioxide and carbon disulfide (hereinafter may also be referred to as "modifying agent MC") is added to the reaction system after addition of compound ST in the second step. Through that procedure, a group "$-C(=X)X^-(M^{r+})$" or "-C(=X)XH" may be incorporated into a side chain or an terminal portion of the polymer. The reaction system to which modifying agent MC is added essentially allows reaction between the polymer contained in the polymer solution after addition of compound ST (more specifically, a partial structure derived from compound ST incorporated into a side chain of the polymer) and modifying agent MC. Accordingly, in the third step, modifying agent MC may be directly added to the liquid phase in the reactor including the polymer solution to which compound ST has been added, or modifying agent MC may be added the gas phase of the reactor, to thereby evoke modification reaction by modifying agent MC.

No particular limitation is imposed on the mode and amounts of $CO_2$ and $CS_2$ to be added to the reaction system. For example, in the case where $CO_2$ gas is supplied to the reaction system after addition of compound ST, $CO_2$ gas is preferably supplied to the reaction system until disappearance of the color of polymer solution D.

The temperature of modification reaction in the first to third steps is, for example, -20°C to 75°C, preferably 0 to 50°C. According to the production method of the present disclosure including the first to third steps, modification reaction can be proceeded at about ambient temperature (20°C), which is preferred. No particular limitation is imposed on the time of modification reaction, and the reaction time may be appropriately determined in each step.

A conceivable mechanism including the modification reactions of the first to third steps is as follows. Firstly, in the first step, an alkali metal element is incorporated into at least any of a carbon atom at the allyl position of 1,2-vinyl bond, a carbon atom at the allyl position of 1,4-vinyl bond, and a carbon atom at the benzyl position originating from the aromatic vinyl compound (i.e., a carbon atom forming a main chain), each being present in the conjugated diene-based polymer. Next, in the second step, the alkali metal element reacts with compound ST, whereby a partial structure represented by the following formula (a) is incorporated into a side chain or the like of the polymer. Thereafter, in the third step, further reaction with $CO_2$ or the like proceeds, whereby a partial structure represented by the aforementioned formula (1) or (2) (e.g., a partial structure represented by the following formula (b)) is formed at a side chain or the like of the polymer. In the following scheme, $R^1$, $R^2$, $R^3$, $Ar^1$, and "*" have the same definitions as in the aforementioned formula (1). The following scheme represents in the case X in the formula (1) is an oxygen atom.

[F8]

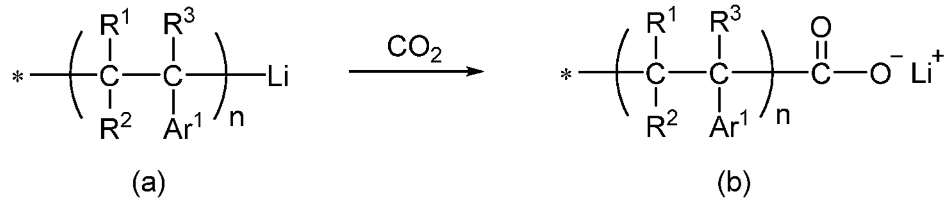

When the conjugated diene-based polymer contained in polymer solution D has an active terminal, conceivably, a partial structure represented by the aforementioned formula (1) or (2) (e.g., a partial structure represented by the aforementioned formula (b)) is also incorporated into a polymerization completed terminal via the second and third steps.

(Acid/metal salt addition step)

The production method of the present disclosure may further include, in addition to the first to third steps, a step of adding one or both of an acid and a metal salt to the reaction system to which the modifying agent MC has been added. Through this additional step, Mr+ on the group "-C(=X)$X^-$($M^{r+}$)" can be converted to another ion, or the group "-C(=X)XH" can be converted to a salt, the groups being present in the modified conjugated diene-based polymer obtained through the third step.

The acid employed in the acid/metal salt addition step of the present disclosure may be an inorganic acid or an organic acid. Specific examples of the acid include a partial ester of phosphoric acid or carbonic acid, hydrofluoric acid, hydrochloric acid, oxalic acid, hydroiodic acid, sulfuric acid, carbonic acid, phosphoric acid, carboxylic acid, and sulfonic acid.

Examples of the metal of the metal salt include alkali metal elements, alkaline earth metal elements, elements Sc to Hg in group 3 to group 12, Al to In in group 13 elements, Ge and Sn in group 14 elements, and Sb and Bi in group 15 elements. Among these salts, a salt containing at least one species selected from the group consisting of alkali metal elements, alkaline earth metal elements, zinc, aluminum, and iron is preferred. Alternatively, as the metal salt, there may be used an inorganic acid salt (e.g., sulfate salt), an organic acid salt (e.g., phosphoric acid salt), a metal halide salt, or a metal alkoxide, each containing any of the aforementioned metals.

When at least any of the acid and the metal salt is added to polymer solution D after addition of compound ST, no particular limitation is imposed on the amount of the acid or the metal salt added to the polymer solution, and the amount may be set appropriately. The amount of the acid or the metal salt is, for example, 0.1 to 50 mmol with respect to 100 parts by mass of the entire amount of the monomer(s) forming the conjugated diene-based polymer, preferably 0.2 to 20 mmol. In the acid/metal salt addition step of the present disclosure, acids and metal salts may be used singly or in combination of two or more species.

Through the aforementioned modification reaction, a solution containing modified conjugated diene-based polymer [A] can be produced. For isolating conjugated diene-based polymer [A] from the solution, a known solvent removal method (e.g., steam stripping), drying (e.g., a thermal treatment), etc. may be employed.

<<Polymer compositions

The polymer composition of the present disclosure contains modified conjugated diene-based polymer [A] (hereinafter may also be referred to simply as "component [A]"). The component[A] content of the polymer composition is preferably 10 mass% or more with respect to the entire amount of the polymer composition, more preferably 20 mass% or more, still more preferably 25 mass% or more. Also, the component[A] content is preferably 80 mass% or less with respect to the entire amount of the polymer composition, more preferably 70 mass% or less, still more preferably 60 mass% or less.

In addition to modified conjugated diene-based polymer [A], the polymer composition of the present disclosure may further contain the following components.

[B] Silica

The polymer composition of the present disclosure may contain silica [B]. The amount of silica [B], with respect to 100 parts by mass of the rubber component containing modified conjugated diene-based polymer [A], is preferably 10 to 120 parts by mass, more preferably 20 to 100 parts by mass. When the amount of silica [B], with respect to 100

parts by mass of the rubber component containing modified conjugated diene-based polymer [A], is 10 parts by mass or more, low-loss performance, fracture resistance, and wear resistance of the polymer composition can be sufficiently enhanced, whereas when the amount of silica [B] is 120 parts by mass or less, processability of the polymer composition can be sufficiently enhanced.

As used herein, the "rubber component" contained in the polymer composition refers to a polymer that can provide, through heat curing, a cured product exhibiting rubber elasticity. The cured product evokes considerable deformation at room temperature through application of small force (e.g., deformation of twice or more elongation by stretching at room temperature), and rapidly returns to substantially its original form when the force is removed.

No particular limitation is imposed on the silica [B] for use in the polymer composition, and examples of the silica [B] include wet silica (hydrous silicic acid), dry silica (silicic anhydride), calcium silicate, and aluminum silicate. Of these, wet silica is preferred. These silica species may be used singly or in combination of two or more species. The BET specific surface area (as determined in accordance with ISO 5794/1) of the silica species is preferably 40 to 350 $m^2/g$, more preferably 80 to 350 $m^2/g$, still more preferably 120 to 350 $m^2/g$. A silica product having a BET specific surface area falling within the range is advantageous, from the viewpoint of achieving both reinforcement of the rubber products produced from the composition and good dispersibility of silica in modified conjugated diene-based polymer [A]. As such silica products, there may be used commercial products such as "Nipsile AQ" (BET specific surface area: 205 $m^2/g$) and "Nipsil KQ" (products of Tosoh Silica Corporation), and "Ultrasil VN3" (product of Degussa, BET specific surface area: 175 $m^2/g$).

As silica products contained in the polymer composition, two or more species each having different specific surface areas may be used. More specifically, there may be employed a first silica species having a CTAB (cetyltrimethylammonium bromide) specific surface area of 180 $m^2/g$ or more, a BET specific surface area of 185 $m^2/g$ or more, and an aggregate size of 45 nm or greater, in combination with a second silica species having a CTAB specific surface area of 95 $m^2/g$ or less and a BET specific surface area of 100 $m^2/g$ or less. The CTAB specific surface area may be determined in accordance with ASTM D3765-92.

The polymer composition of the present disclosure contains a first silica species having a CTAB specific surface area of 180 $m^2/g$ or more, a BET specific surface area of 185 $m^2/g$ or more, and an aggregate size of 45 nm or greater, in combination with a second silica species having a CTAB specific surface area of 95 $m^2/g$ or less and a BET specific surface area of 100 $m^2/g$ or less. By use of the aforementioned first and second silica species, the first silica having a small mean primary particle size and a relatively large aggregate size can be suitably dispersed in the rubber component. As a result, dispersibility of silica can be improved, and excellent rubber breakage strength, wear resistance, fuel efficiency, and processabily can be attained.

The CTAB specific surface area of the first silica species is preferably 190 $m^2/g$ or more, more preferably 195 $m^2/g$ or more, still more preferably 197 $m^2/g$ or more. When the CTAB specific surface area is less than 180 $m^2/g$, difficulty is generally encountered in attaining sufficiently improved rubber breakage strength and wear resistance. The CTAB specific surface area of the first silica species is preferably 350 $m^2/g$ or less, more preferably 300 $m^2/g$ or less, still more preferably 250 $m^2/g$ or less. When the CTAB specific surface area is in excess of 350 $m^2/g$, dispersibility of silica is impaired to evoke aggregation. In such as a case, the physical properties tend to be impaired.

The BET specific surface area of the first silica species is preferably 190 $m^2/g$ or more, more preferably 195 $m^2/g$ or more, still more preferably 210 $m^2/g$ or more. When the BET specific surface area is less than 185 $m^2/g$, difficulty is generally encountered in attaining sufficiently improved rubber breakage strength and wear resistance. The BET specific surface area of the first silica species is preferably 350 $m^2/g$ or less, more preferably 300 $m^2/g$ or less, still more preferably 260 $m^2/g$ or less. When the BET specific surface area is in excess of 350 $m^2/g$, dispersibility of silica is impaired to evoke aggregation. In such as a case, the physical properties tend to be impaired. The BET specific surface area may be determined in accordance with ASTM D3037-81.

The aggregate size of the first silica species is 45 nm or greater, preferably 50 nm or greater, more preferably 55 nm or greater, still more preferably 60 nm or greater. Also, the aggregate size of the first silica species is preferably 100 nm or smaller, more preferably 80 nm or smaller, still more preferably 70 nm or smaller, particularly preferably 67 nm or smaller. When the first silica species has such an aggregate size, excellent fuel efficiency and wear resistance can be attained, while good dispersibility (processability) is maintained. The aggregate size of silica may be determined though a method disclosed in Japanese Patent Application Laid-Open (kokai) No. 2011-140613.

The mean primary particle size of the first silica species is preferably 25 nm or small, more preferably 22 nm or small, still more preferably 17 nm or smaller, particularly preferably 14 nm or smaller. No particular limitation is imposed on the lower limit of the mean primary particle size of the first silica species. However, the mean primary particle size is preferably 3 nm or greater, more preferably 5 nm or greater, still more preferably 7 nm or greater. Although the first silica species has such a small mean primary particle size, by virtue of the structure of carbon black having the aforementioned aggregate size, dispersibility of silica (processability) can be more improved, whereby fuel efficiency and wear resistance can be further improved. The mean primary particle size of silica can be determined by observing the silica species under a transmission or a scanning electron microscope; measuring particle sizes of 400 or greater primary particles of

silica observed in a vision field; and averaging the measurements.

The CTAB specific surface area of the second silica species is preferably 10 $m^2/g$ or more, more preferably 20 $m^2/g$ or more, still more preferably 30 $m^2/g$ or more. When the CTAB specific surface area is less than 10 $m^2/g$, reinforcement performance decreases, and difficulty may be encountered in securing dynamic strength and wear resistance required for the polymer composition used in producing tires. The CTAB specific surface area of the second silica species is preferably 80 $m^2/g$ or less, more preferably 60 $m^2/g$ or less, still more preferably 50 $m^2/g$ or less. When the CTAB specific surface area exceeds 95 $m^2/g$, dispersibility of silica is impaired, and difficulty may be countered in improving rubber breakage strength and wear resistance.

The BET specific surface area of the second silica species is preferably 10 $m^2/g$ or more, more preferably 20 $m^2/g$ or more, still more preferably 30 $m^2/g$ or more. When the BET specific surface area is less than 10 $m^2/g$, reinforcing performance decreases. In such a case, difficulty may be encountered in securing dynamic strength and wear resistance required for a polymer composition for producing tires. The BET specific surface area of the second silica species is preferably 85 $m^2/g$ or less, more preferably 60 $m^2/g$ or less, still more preferably 50 $m^2/g$ or less. When the BET specific surface area is in excess of 100 $m^2/g$, dispersibility of silica decreases, and difficulty is conceivably encountered in enhancement of fracture strength and wear resistance of rubber.

The mean primary particle size of the second silica species is preferably 20 nm or greater, more preferably 25 nm or greater, still more preferably 30 nm or greater, particularly preferably 35 nm or greater, most preferably 55 nm or greater. Also, no particular limitation is imposed on the upper limit of the mean primary particle size of the second silica species. The mean primary particle size is preferably 500 nm or smaller, more preferably 200 nm or smaller, still more preferably 100 nm or smaller, particularly preferably 70 nm or smaller. By virtue of such a mean primary particle size, rubber breakage strength and wear resistance can be improved.

[C] Carbon black

From the viewpoints of fracture characteristics and wear resistance, the polymer composition of the present disclosure preferably contains carbon black [C]. No particular limitation is imposed on the carbon black, and examples thereof include carbon black products of a grade such as GPF, FEF, HAF, ISAF, or SAF. No particular limitation is imposed on the nitrogen adsorption specific surface area ($N_2SA$) of carbon black, and it is preferably 50 to 200 $m^2/g$, more preferably 70 to 150 $m^2/g$, from the viewpoint of further enhancement of the effects of the present disclosure and the like. The nitrogen adsorption specific surface area ($N_2SA$) is defined as a value obtained by measuring the amount of nitrogen adsorbed on the surface of carbon black through JIS K6217-2:2001 "part 2: Determination of specific surface area, Nitrogen adsorption method, Single point method." The carbon black products may be used singly or in combination of two or more species. When carbon black is incorporated into the polymer composition of the present disclosure, the amount of carbon black with respect to 100 parts by mass of modified conjugated diene-based polymer [A] is preferably 1 to 150 parts by mass, more preferably 5 to 120 parts by mass.

[Other fillers]

The polymer composition of the present disclosure may contain, in addition to the aforementioned silica [B] and carbon black [C], an additional filler. Examples of the additional filler include alumina ($Al_2O_3$) such as $\gamma$-alumina or $\alpha$-alumina; alumina monohydrate ($Al_2O_3 \cdot H_2O$) such as bohemite or diaspore; aluminum hydroxide [$Al(OH)_3$] such as gibbsite or bayerite; aluminum carbonate [$Al_2(CO_3)_3$], magnesium hydroxide [$Mg(OH)_2$], magnesium oxide (MgO), magnesium carbonate ($MgCO_3$), talc ($3MgO \cdot 4SiO_2 \cdot H_2O$), attapulgite ($5MgO \cdot 8SiO_2 \cdot 9H_2O$), titanium white ($TiO_2$), titanium black ($TiO_{2n-1}$), calcium oxide (CaO), calcium hydroxide [$Ca(OH)_2$], aluminum magnesium oxide ($MgO \cdot Al_2O_3$), clay ($Al_2O_3 \cdot 2SiO_2$), kaolin ($Al_2O_3 \cdot 2SiO_2 \cdot 2H_2O$), pyrophyllite ($Al_2O_3 \cdot 4SiO_2 \cdot H_2O$), bentonite ($Al_2O_3 \cdot 4SiO_2 \cdot 2H_2O$), aluminum silicate (e.g., $Al_2SiO_3$ or $Al_4 \cdot 3SiO_4 \cdot 5H_2O$), magnesium silicate (e.g., $Mg_2SiO_4$ or $MgSiO_3$), calcium silicate (e.g., $Ca_2SiO_4$), aluminum calcium silicate (e.g., $Al_2O_3 \cdot CaO\text{-}2SiO_2$), magnesium calcium silicate ($CaMgSiO_4$), calcium carbonate ($CaCO_3$), zirconium oxide ($ZrO_2$), zirconium hydroxide [$ZrO(OH)_2 \cdot nH_2O$], and zirconium carbonate [$Zr(CO_3)_2$]; and crystalline aluminosilicate salts such as various zeolites, which contains hydrogen, an alkali metal, or an alkaline earth metal for compensating electric charge.

In the polymer composition of the present disclosure, the filler (including silica [B] and carbon black [C]) content is preferably 30 parts by mass or more, more preferably 40 parts by mass or more, with respect to 100 parts by mass of rubber component(s). Also, the filler content is preferably 150 parts by mass or less, more preferably 130 parts by mass or less. When the filler content of the polymer composition satisfies the above conditions, in the case where the polymer composition of the present disclosure is used for producing tire treads, low rolling resistance, braking distance on the wet road surface, handling performance on the dry road surface, and wear resistance of the tire can be further improved in a highly well-balanced manner.

[D] Other rubber components

In the present disclosure, at least one diene-based rubber may be used as a rubber component different from modified conjugated diene-based polymer [A]. Such a component is selected from among, for example, natural rubber, isoprene rubber, butadiene rubber, emulsion-polymerized styrene-butadiene rubber, solution-polymerized styrene-butadiene rubber, butyl rubber, halogenated butyl rubber, and ethylene-propylene rubber. Among them, the polymer composition preferably contains natural rubber, butadiene rubber, and styrene-butadiene rubber. When components [D] and [A] are mixed together, the components may be mixed during kneading by means of a Banbury mixer, a roller, or the like, which is generally carried out. Alternatively, component [D] may be added to a solution of polymer [A] after polymerization, and then the mixture is dried, to thereby complete mixing.

The proportion between component [A] and component [D] is as follows. The amounts of component [A] and component [D], with respect to 100 parts by mass of rubber components (component [A] + component [D]), are preferably 50 to 100 parts by mass and 0 to 50 parts by mass, respectively, more preferably 60 to 100 parts by mass and 0 to 40 parts by mass, respectively. Particularly, relative amounts of 80 to 100 parts by mass and 0 to 20 parts by mass, respectively, are optimum, for serving as a polymer composition for producing tires.

In the present disclosure, a part or the entirety of other rubber components [D] may employ a liquid rubber, from the viewpoint of further enhancement of dry grip performance, wet grip performance, ice grip performance, and blow out resistance.

Examples of the liquid rubber include liquid polyisoprene (liquid IR), liquid polybutadiene (liquid BR), liquid styrene-butadiene copolymer (liquid SBR), and liquid ethylene-propylene copolymer (liquid EP). For example, a liquid SBR having a weight average molecular weight of 1,000 to 100,000, preferably 2,000 to 80,000 may be used. The weight average molecular weight in this case refers to a weight average molecular weight (reduced to polystyrene) determined through gel permeation chromatography (GPC). The liquid rubber employed in the present disclosure exhibits a flowability at 23°C.

[E] Thermoplastic/thermosetting resin

The polymer composition of the present disclosure may contain thermoplastic/thermosetting resin [E] (hereinafter may also be referred to simply as "resin [E]"). The resin [E] is preferably at least one species selected from the group containing of a styrene-based resin, polyethylene, a C5-type resin, a C9-type resin, a C5/C9-type resin, a dicyclopentadiene-based resin, an alkyl-phenolic resin, and a terpene-based resin, from the viewpoint of providing a cross-linked rubber having more excellent properties including mechanical strength, wear resistance, and anti-crack-propagation property. These resins [E] may be used singly or in combination of two or more species.

The styrene-based resin is a polymer obtained from a styrene-based monomer. Among such polymers, preferred is a styrene-based polymer having structural units derived from a styrene-based monomer in an amount of 20 mass% or more with respect to the entire amount of monomer units of the styrene-based resin. Examples of the styrene-based monomer include styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, and p-chlorostyrene. Among them, the styrene-based monomer is preferably at least one of styrene and α-methylstyrene.

The styrene-based resin may be a homopolymer formed through polymerization of one single styrene-based monomer, or a copolymer formed through co-polymerization of two or more styrene-based monomers. Alternatively, the styrene-based resin may be a copolymer of a styrene-based monomer and another monomer which can co-polymerize with the styrene-based monomer. Examples of the above additional monomer include acrylonitriles such as acrylonitrile and (meth)acrylonitrile; unsaturated carboxylic acids such as acrylic acids and (meth)acrylic acids; unsaturated carboxylic acid esters such as methyl acrylate and methyl (meth)acrylate; dienes such as chloroprene, butadiene, and isoprene; olefins such as 1-butene and 1-pentene; and α,β-unsaturated carboxylic acid or anhydride such as maleic anhydride.

The softening point of the styrene-based resin is preferably 30°C or higher, more preferably 60°C or higher, still more preferably 80°C or higher. When the softening point is 30°C or higher, the effect of improving the anti-crack-propagation property of the cross-linked product tends to be easily attained. The softening point of the styrene-based resin is preferably 160°C or lower, more preferably 130°C or lower, still more preferably 100°C or lower. When the softening point is 160°C or lower, dispersibility of the resin is enhanced. In this case, anti-crack-propagation property, wear resistance, and breaking strength can be readily improved. In the present disclosure, the softening point of the styrene-based resin is determined through a method defined in JIS K 6220-1:2015 by means of a ring and ball softening point apparatus. The temperature at which a ball placed on a sample falls to a base plate by softening the sample is employed as the softening point.

As the styrene-based resin, there may be used a block polymer (thermoplastic elastomer) including a conjugated diene-based resin block as a soft segment and a polystyrene-based block as a hard segment. Use of such a block polymer is preferred, since the effect of improving the anti-crack-propagation property can be further enhanced. In the

conjugated diene-based resin block contained in the block polymer, a part of C-C double bonds in structural units derived from the conjugated diene compound may be hydrogenated.

Examples of the conjugated diene compound forming the aforementioned conjugated diene-based resin block include 1,3-butadiene, isoprene, 2,3-dimethyl-1,3-butadiene, 1,3-pentadiene, and 1,3-hexadiene. These conjugated diene compounds may be used singly or in combination of two or more species. Of these, at least one of 1,3-butadiene and isoprene is preferred as the conjugated diene compound. The conjugated diene unit content of the block polymer is preferably 20 mass% or more, more preferably 30 mass% or more. Also the conjugated diene unit content is preferably 80 mass% or less, more preferably 70 mass% or lower.

From the viewpoint of achieving higher breaking strength, the ratio of the polystyrene-based block in the aforementioned block polymer is preferably 20 mass% or more. Also, the polystyrene-based block content is preferably 80 mass% or less, more preferably 70 mass% or less. The polystyrene-based block content, conjugated diene-based resin block content, and conjugated diene unit content of the block polymer can be calculated by corresponding integral proportions obtained by a $^{1}$H-NMR spectrum.

Specific examples of the block polymer include styrene-butadiene block copolymer, styrene-isoprene block copolymer, an epoxidated product of styrene-butadiene block copolymer, and a block copolymer in which a part of conjugated diene-based resin blocks of a styrene-butadiene block copolymer or a styrene-isoprene block copolymer have been hydrogenated. More specific examples include styrene-butadiene-styrene block copolymer (SBS), styrene-isoprene-styrene block copolymer (SIS), styrene-butadiene-butylene-styrene block copolymer (SBBS), an epoxidated product of styrene-butadiene-styrene block copolymer, and hydrogenated products of these copolymers. Among these block polymers, from the viewpoint of sufficient cross-linking points, SBS and SIS (having a conjugated diene-based polymer block in which a soft segment has not been hydrogenated) and an epoxidated product of styrene-butadiene-styrene block copolymer are preferably used.

Examples of the polyethylene species include low-density polyethylene (LDPE), high-density polyethylene (HDPE), and linear low-density polyethylene (LLDPE). The C5-type resin is a solid polymer (C5-type synthetic petroleum resin) obtained through polymerization of a C5 fraction in the presence of a Friedel-Crafts catalyst (e.g., $AlCl_3$ or $BF_3$). Specific examples of the C5-type resin include copolymers mainly formed from isoprene, cyclopentadiene, 1,3-pentadiene, 1-pentene, etc., 2-pentene-dicyclopentadiene copolymer, and a polymer mainly formed from 1,3-pentadiene.

The C9-type resin is a solid polymer (C9-type synthetic petroleum resin) obtained through polymerization of a C9 fraction in the presence of a Friedel-Crafts catalyst (e.g., $AlCl_3$ or $BF_3$). Specific examples of the C9-type resin include copolymers mainly formed from indene, methylindene, vinyltoluene, etc. The C5/C9-type resin is a solid polymer (C5/C9-type synthetic petroleum resin) obtained through polymerization of C5 to C9 fractions in the presence of a Friedel-Crafts catalyst (e.g., $AlCl_3$ or $BF_3$). Specific examples of the C5/C9-type resin include copolymers mainly formed from, for example, vinyltoluene and indene. From the viewpoint of compatibility with rubber components, the C5/C9-type resin preferably has low C≥9 component content. Specifically, the C5/C9 resin preferably has an amount of C≥9 components in the total amount of the resin less than 50 mass%, more preferably 40 mass% or less.

The dicyclopentadiene-based resin is a petroleum resin obtained mainly from dicyclopentadiene present in a C5 fraction. Specific examples of the dicyclopentadiene-based resin include "Markarez M" series (M-890A, M-845A, M-990A, etc.) (products of Marzen Petrochemical Co., Ltd.). Examples of the alkylphenolic resin include alkylphenol acetylene resin such as p-tert-butylphenol acetylene resin; and alkylphenol-formaldehyde resin of low polymerization degree.

The terpene resin is a solid resin prepared by polymerizing turpentine (recovered in production of rosin from pine trees) or a polymerization component isolated therefrom in the presence of a Friedel-Crafts catalyst, and examples thereof include β-pinene resin and α-pinene resin. Commercial products of the terpene resin may also be used. Examples thereof include "YS Resin" series (PX-1250, TR-105, etc.) (products of Yasuhara Chemical Co., Ltd.) and "Piccolyte" series (A115, S115, etc.) (products of Hercules).

A typical example of the terpene-aromatic compound resin is a terpene-phenolic resin. The terpene-phenolic resin may be prepared by reacting a terpene with various phenols in the presence of a Friedel-Crafts catalyst, or such a process further concomitant with condensation with formalin. No particular limitation is imposed on the raw material terpene, and monoterpene hydrocarbons such as α-pinene and limonene are preferred. A monoterpene hydrocarbon including α-pinene is more preferred, with pure α-pinene being particularly preferred. In the present disclosure, a terpene-phenolic resin having low phenolic content is preferred. The term "low phenol content" refers to the phenolic content of the total amount of the resin being less than 50 mass%, preferably 40 mass% or less. When a terpene-aromatic compound resin, in particular, a terpene-phenolic resin, is used as resin [E], handling performance can also be enhanced. Commercial products of the terpene-aromatic compound resin may be used. Examples of commercial products include "Tamanol 803L" and "Tamanol 901" (products of Arakawa Chemical Industries, Ltd.) and "YS Polyster (registered trademark)" series (products of Yasuhara Chemical Co., Ltd.).

The amount of resin [E] to be incorporated is preferably 1 part by mass or more, with respect to 100 parts by mass of the rubber component(s) contained in the polymer composition. Use of resin [E] in an amount of 1 part by mass or more is suitable, since the effect of improving the wear resistance, breaking strength, and anti-crack-propagation

property of the cross-linked product obtained from the polymer composition can be satisfactorily enhanced. The amount of resin [E] is more preferably 3 parts by mass or more, still more preferably 7 parts by mass or more, with respect to 100 parts by mass of the rubber component(s). From the viewpoint of maintaining characteristics of the polymer composition at suitable levels, the amount of resin [E] is preferably 50 parts by mass or less, more preferably 30 parts by mass or less, still more preferably 25 parts by mass or less, with respect to 100 parts by mass of the rubber component(s) contained in the polymer composition. These resins [E] may be used singly or in combination of two or more species.

[F] Silane coupling agent

In the present disclosure, a silane coupling agent may be added, to thereby further enhance dispersibility of silica. No particular limitation is imposed on the silane coupling agent to be used, but a sulfur-containing silane coupling agent is preferred. Examples of the silane coupling agent include bis(3-triethoxysilylpropyl) tetrasulfide, bis(3-triethoxysilylpropyl) disulfide, 3-trimethoxysilylpropylbenzothiazole tetrasulfide, γ-mercaptopropyltriethoxysilane, and 3-octanoylthiopropyltirethoxysilane.

The amount of the silane coupling agent to be used is preferably 1 to 20 parts by mass, with respect to 100 mass of silica. When the amount of the silane coupling agent is less than 1 part by mass, sufficient enhancement dispersibility of silica may fail to attain due to an excessively small amount. In contrast, when the amount is in excess of 20 parts by mass, processability and elongation at break may be impaired in some cases. The amount of the silane coupling agent is more preferably 5 to 15 parts by mass, with respect to 100 parts by mass of silica.

Into the polymer composition, a process oil which is generally used for oil-extending an elastomer may be incorporated as an extender oil. The process oil is incorporated into a polymer composition through, for example direct addition thereof during blending of rubber. Various oils known in the art are preferably used as a process oil, and examples of the process oil include aromatic oil, paraffin-based oil, naphthene-based oil, and vegetable oil and, further oils having low polycyclic aromatic compound content (i.e., low-PCA oils) such as a mild extraction solvate (MES), a treated distillate aromatic extract (TDAE), and a special residual aromatic extract (SRAE); and heavy naphthene-based oil. Examples of commercial products of MES, TDAE, and SRAE include Catenex SNR (heavy paraffin obtained by dewaxing a distilate with solvent) (product of Shell) as MES; Vivatec 500 (product of H&R Wasag AG) as TDAE; and NC140 (product of Japan Energy Corp.) as SRAE. The amount of process oil is preferably 10 to 100 parts by mass, with respect to the total amount of polymer components contained in the polymer composition as 100 parts by mass.

In addition to the aforementioned components, various additives generally employed in polymer compositions for producing tires may be incorporated into the polymer composition. Examples of such additives include an antioxidant, zinc flower, stearic acid, a softening agent, a vulcanization accelerator, a silane coupling agent, a compatibilizer, a vulcanization aid, a processing aid, and an anti-scorching agent. The amount of each additive may be appropriately determined, so long as the effects of the present disclosure are not impaired.

The polymer composition of the present disclosure can be applied, as a cross-linked product, to various rubber products, by kneading polymer components, inorganic fillers, and optional components by means of a kneader such as an open-type kneader (e.g., a roller) or a close-type kneader (e.g., a Banbury mixer); molding; and cross-linking (vulcanizing). More specifically, the cross-linked product can be applied to, for example, tire parts such as tire tread, under tread, carcass, sidewall, and bead; sealing materials such as packings, gaskets, weather strips, and O-rings; exterior/interior coating materials for vehicles including automobiles, marine vessels, aircraft, and trains; building materials; vibration-proof rubbers for industrial machines, facilities, etc.; hoses and hose covers such as diaphragms, rollers, radiator hoses, and air hoses; belts such as power-transmission belt; linings; dust boots; materials of medical apparatus; fenders; electric wire insulating materials; and other industrial products.

According to conjugated diene-based resin [A], a cross-linked product can be obtained, wherein the product exhibits excellent physical properties required for tires (e.g., tensile strength and wear resistance). Thus, the polymer composition containing modified conjugated diene-based polymer [A] can be suitably used as a material particularly for forming treads or sidewalls of tires or both.

Production of tires may be carried out through any customary method. In one procedure, the polymer composition is kneaded by means of a kneader, and the kneaded product is formed into a sheet, which is placed at a predetermined position (e.g., outside the carcass in the case of sidewall) through a customary method, followed by performing vulcanization molding. As a result, treads or sidewalls are formed, to thereby yield a pneumatic tire.

The present disclosure, which has been described in detail hereinabove, provides the following means.

[Means 1] A modified conjugated diene-based polymer having a structural unit derived from a conjugated diene compound, and at least one species selected from the group consisting of a partial structure represented by formula (1) and a partial structure represented by formula (2).

[Means 2] The modified conjugated diene-based polymer as described in [Means 1], wherein the atomic bond in any of formulas (1) and (2) bonds to a carbon atom forming a main chain of the polymer.

[Means 3] The modified conjugated diene-based polymer as described in [Means 1] or [Means 2], wherein $M^{r+}$ is selected from the group consisting of an alkali metal ion, an alkaline earth metal ion, a zinc ion, an aluminum ion, and an iron ion.
[Means 4] The modified conjugated diene-based polymer as described in any of [Means 1] to [Means 3], which further has a structural unit derived from a compound represented by formula (4).
[Means 5] The modified conjugated diene-based polymer as described in any of [Means 1] to [Means 4], which has a weight average molecular weight of 30,000 to 2,000,000.
[Means 6] The modified conjugated diene-based polymer as described in any of [Means 1] to [Means 5], which has at least one functional group selected from the group consisting of an amino group, a nitrogen-containing heterocyclic group, a phosphino group, a hydroxy group, a thiol group, and a hydrocarbyloxysilyl group.
[Means 7] A method for producing a modified conjugated diene-based polymer comprising: a step of adding an alkali metal compound to a polymer solution containing a conjugated diene-based polymer; a step of adding a compound represented by formula (3) to the polymer solution to which the alkali metal compound has been added; and a step of adding one or both of carbon dioxide and carbon disulfide to a reaction system to which the compound represented by formula (3) has been added.
[Means 8] The method for producing the modified conjugated diene-based polymer as described in [Means 7], wherein the polymer solution is produced by polymerizing monomers including a conjugated diene compound in a solvent in the presence of a metal compound containing an alkali metal element or an alkaline earth metal element.
[Means 9] The method for producing the modified conjugated diene-based polymer as described in [Means 8], wherein the polymer solution is produced by polymerizing the monomers, to thereby yield a conjugated diene-based polymer having an active terminal, and, subsequently, reacting the active terminal, in a solvent, with a compound which has at least one element selected from the group consisting of nitrogen, phosphorus, oxygen, sulfur, and silicon and which can react with the active terminal.
[Means 10] The method for producing the modified conjugated diene-based polymer as described in [Means 8] or [Means 9], wherein the metal compound includes a metal amide compound containing an alkali metal element or an alkaline earth metal element.
[Means 11] The method for producing the modified conjugated diene-based polymer as described in any of [Means 7] to [Means 10], which method further includes a step of adding one or both of an acid and a metal salt to a reaction system to which one or both of carbon dioxide and carbon disulfide have been added.
[Means 12] A polymer composition comprising the modified conjugated diene-based polymer as recited in any of [Means 1] to [Means 6] or the modified conjugated diene-based polymer produced through a production method as recited in any of [Means 7] to [Means 11], and at least one species selected from the group consisting of silica and carbon black.
[Means 13] The polymer composition as described in [Means 12], which further contains sulfur.
[Means 14] A cross-linked product produced by applying the polymer composition as recited in [Means 12] or [Means 13].
[Means 15] A tire having a tread and a sidewall, and one or both of them is formed by applying the polymer composition as recited in [Means 12] or [Means 13].

Examples

The present disclosure will next be described in detail by way of examples, which should not be construed as limiting the disclosure thereto. Unless otherwise specified, "part(s)" and "%" in the Examples and Comparative Examples are on a mass basis. Physical properties of each polymer were measured through the following methods.

[Characteristic evaluation of polymer]

·Vinyl content (mol%): determined through 700 MHz $^{1}H$-NMR.
·Bonded styrene content (%): determined through 700 MHz $^{1}H$-NMR.
·Number of particular structures incorporated in one polymer chain: determined through $^{1}H$-NMR (resonance frequency: 700 MHz) and $^{13}C$-NMR employing inverse-gated-decoupling (observation frequency: 175 MHz).
·Average chain length $L_{av}$: determined through $^{1}H$-NMR (resonance frequency: 700 MHz) and $^{13}C$-NMR employing inverse-gated-decoupling (observation frequency: 175 MHz).

·Total weight average molecular weight: determined from a GPC curve obtained by means of a gel permeation chromatograph (GPC, HLC-8020, product of Tosoh Corporation) for a polymer without introduction of a particular structure

or before introduction of a particular structure (reduced to polystyrene). Specific measurement conditions are as follows.

(Measurement conditions)

Column: GMH-HR-H (product of Tosoh Corporation). Two columns were connected in series.

Detector: Differential refractometer RI-8020 (product of Tosoh Corporation)
Eluent: Tetrahydrofuran
Column temperature: 40°C
Flow rate: 1.0 mL/min
Sample concentration: 10 mg/20mL

<Synthesis of (modified) conjugated diene-based polymers>

[Comparative Example 1-1: Synthesis and physical properties of conjugated diene-based polymer A-1]

To an autoclave reactor (capacity: 5 L) with a nitrogen atmosphere, cyclohexane (2,000 g), tetrahydrofuran (10,000 ppm, 20.0 g), styrene (50 g), and 1,3-butadiene (180 g) were added. The temperature of the contents of the reactor was adjusted to 10°C, and then a small amount of n-butyllithium was added, to thereby remove a deactivating component. Thereafter, n-butyllithium (2.41 mmol) serving as a polymerization initiator was added thereto, to thereby initiate polymerization. Polymerization was performed under adiabatic conditions, and the temperature rose to 85°C (the highest temperature). When the polymerization conversion was confirmed to be 99%, 1,3-butadiene (20 g) was further added over 1 minute, and further polymerization was performed for 3 minutes. Ten minutes thereafter, methanol (5 mL) serving as a polymerization terminator was added thereto, to thereby terminate polymerization reaction, whereby a polymer solution containing an unmodified conjugated diene-based polymer was obtained.
To the thus-obtained polymer solution, 2,6-di-tert-butyl-p-cresol (4.40 g) was added. Then, the thus-obtained mixture was subjected to steam stripping for removal of the solvent, and the resultant matter was dried by means of a heat roller whose temperature was controlled at 110°C, to thereby yield unmodified conjugated diene-based polymer A-1. Table 1 shows formulations for producing conjugated diene-based polymer A-1, and Table 3 shows properties including values of physical properties of the obtained conjugated diene-based polymer A-1.

[Comparative Example 1-2: Synthesis and physical properties of modified conjugated diene-based polymer A-2]

To an autoclave reactor (capacity: 5 L) with a nitrogen atmosphere, cyclohexane (2,000 g), tetrahydrofuran (10,000 ppm, 20.0 g), styrene (50 g), and 1,3-butadiene (180 g) were added. The temperature of the contents of the reactor was adjusted to 10°C, and then a small amount of n-butyllithium was added, to thereby remove a deactivating component. Thereafter, n-butyllithium (2.41 mmol) and N-(tertbutyldimethylsilyl)-4-piperazine (2.2 mmol) serving as polymerization initiators were added thereto, to thereby initiate polymerization. Polymerization was performed under adiabatic conditions, and the temperature rose to 85°C (the highest temperature). When the polymerization conversion was confirmed to be 99%, 1,3-butadiene (20 g) was further added over 1 minute. Subsequently, N,N-bistrimethylsilylaminopropylmethyldiethoxysilane (2.2 mmol) was added thereto, and the mixture was allowed to react for 15 minutes, whereby a polymer solution containing a modified conjugated diene-based polymer was obtained.
To the thus-obtained polymer solution, 2,6-di-tert-butyl-p-cresol (4.40 g) was added. Then, the thus-obtained mixture was subjected to steam stripping for removal of the solvent, and the resultant matter was dried by means of a heat roller whose temperature was controlled at 110°C, to thereby yield modified conjugated diene-based polymer A-2. Table 1 shows formulations for producing modified conjugated diene-based polymer A-2, and Table 3 shows properties including values of physical properties of the obtained modified conjugated diene-based polymer A-2.

[Comparative Example 1-3: Synthesis and physical properties of modified conjugated diene-based polymer A-3]

To an autoclave reactor (capacity: 5 L) with a nitrogen atmosphere, cyclohexane (2,000 g), 2,2-di(tetrahydrofurfuryl)propane (1.11 mmol), styrene (45 g), 4-methylstyrene (5 g), and 1,3-butadiene (180 g) were added. The temperature of the contents of the reactor was adjusted to 10°C, and then a small amount of n-butyllithium was added, to thereby remove a deactivating component. Thereafter, n-butyllithium (2.81 mmol) serving as a polymerization initiator was added thereto, to thereby initiate polymerization. Polymerization was performed under adiabatic conditions, and the temperature rose to 85°C (the highest temperature). When the polymerization conversion was confirmed to be 99%, 1,3-butadiene (20 g) was further added over 1 minute, and further polymerization was performed for 3 minutes. At this timing, a part of the polymer solution was removed, and methanol (0.1 mL) was added to the recovered polymer solution.

Then, the thus-obtained mixture was dried by means of a heat roller whose temperature was controlled at 110°C, to thereby prepare a sample for the measurement of total weight average molecular weight and analysis of a microstructure (i.e., a sample before incorporation of a modification group). Hereinafter, the sample may also be referred to as "measurement sample A."

The thus-obtained polymer solution was cooled to 50°C and then, tetramethylethylenediamine (TMEDA) (12.1 mmol) and sec-butyllithium (12.1 mmol) were added thereto, and the mixture was stirred at 50°C for 30 minutes. Thereafter $CO_2$ was added to the reactor, and the pressure in the reactor was maintained at 0.1 MPa, followed by further mixing for 20 minutes. Methanol (5 mL) was added to a polymer solution containing the thus-obtained modified conjugated diene-based polymer, to thereby terminate the reaction.

To the thus-obtained polymer solution, 2,6-di-tert-butyl-p-cresol (4.40 g) was added. Then, the thus-obtained mixture was subjected to steam stripping for removal of the solvent, and the resultant matter was dried by means of a heat roller whose temperature was controlled at 110°C, to thereby yield modified conjugated diene-based polymer A-3. Table 1 shows formulations for producing modified conjugated diene-based polymer A-3, and Table 3 shows properties including values of physical properties of the obtained modified conjugated diene-based polymer A-3.

[Example 1-1: Synthesis and physical properties of modified conjugated diene-based polymer A-4]

To an autoclave reactor (capacity: 5 L) with a nitrogen atmosphere, cyclohexane (2,000 g), 2,2-di(tetrahydrofurfuryl)propane (1.11 mmol), styrene (50 g), and 1,3-butadiene (180 g) were added. The temperature of the contents of the reactor was adjusted to 10°C, and then a small amount of n-butyllithium was added, to thereby remove a deactivating component. Thereafter, n-butyllithium (2.81 mmol) and N-(tert-butyldimethylsilyl)-4-piprazine (2.2 mmol) serving as polymerization initiators were added thereto, to thereby initiate polymerization. Polymerization was performed under adiabatic conditions, and the temperature rose to 85°C (the highest temperature). When the polymerization conversion was confirmed to be 99%, 1,3-butadiene (20 g) was further added over 1 minute, and further polymerization was performed for 3 minutes. At this timing, a part of the polymer solution was removed, and methanol (0.1 mL) was added to the recovered polymer solution. Then, the thus-obtained mixture was dried by means of a heat roller whose temperature was controlled at 110°C, to thereby secure measurement sample A.

The measurement sample A was isolated, and then the polymer solution was cooled to 50°C. Then, tetramethylethylenediamine (TMEDA) (12.1 mmol) and sec-butyllithium (12.1 mmol) were added to the solution, and the mixture was stirred at 50°C for 30 minutes. Further, 1,1-diphenylethylene (18.1 mmol) was added thereto, and the mixture was stirred for 30 minutes. Subsequently, $CO_2$ was added to the reactor, and the pressure in the reactor was maintained at 0.1 MPa, followed by further mixing for 20 minutes. At this timing, a part of the polymer solution was removed, and 0.1 mol/L hydrochloric acid in methanol (0.1 mL) was added to the recovered polymer solution. Then, the thus-obtained mixture was dried by means of a heat roller whose temperature was controlled at 110°C, to thereby secure a sample for measurement after incorporation of a modification group (hereinafter referred to as "measurement sample B"). After recovery of measurement sample B, methanol (5 mL) was added to a polymer solution containing the thus-obtained modified conjugated diene-based polymer, to thereby terminate the reaction.

To the thus-obtained polymer solution, 2,6-di-tert-butyl-p-cresol (4.40 g) was added. Then, the thus-obtained mixture was subjected to steam stripping for removal of the solvent, and the resultant matter was dried by means of a heat roller whose temperature was controlled at 110°C, to thereby yield modified conjugated diene-based polymer A-4. Table 1 shows formulations for producing modified conjugated diene-based polymer A-4, and Table 3 shows properties including values of physical properties of the obtained modified conjugated diene-based polymer A-4.

[Examples 1-2 to 1-4, Example 1-6, and Example 1-11: Synthesis and physical properties of modified conjugated diene-based polymers A-5 to A-7, A-9, and A-14]

The procedure of Example 1-1 was repeated, except that formulations employed in polymerization and formulations for incorporating a modification group were modified as shown in Table 1, to thereby yield modified conjugated diene-based polymers A-5 to A-7, A-9, and A-14. Tables 3 and 4 show properties including values of physical properties of the obtained modified conjugated diene-based polymers A-5 to A-7, A-9, and A-14.

[Example 1-5: Synthesis and physical properties of modified conjugated diene-based polymer A-8]

The procedure of Example 1-1 was repeated, except that formulations employed in polymerization and formulations for incorporating a modification group were modified as shown in Table 1, and the operation including adding $CO_2$ to the reactor, and stirring for 20 minutes with maintaining the pressure in the reactor at 0.1 MPa was changed to an operation including adding $CS_2$ (14.41 mmol) to the reactor, and stirring for 20 minutes, to thereby yield modified conjugated diene-based polymer A-8. Table 3 shows properties including values of physical properties of the obtained

modified conjugated diene-based polymer A-8.

[Example 1-7: Synthesis and physical properties of modified conjugated diene-based polymer A-10]

To an autoclave reactor (capacity: 5 L) with a nitrogen atmosphere, cyclohexane (2,600 g), 2,2-di(tetrahydrofurfuryl)propane (0.94 mmol), styrene (40 g), and 1,3-butadiene (150 g) were added. The temperature of the contents of the reactor was adjusted to 10°C, and then a small amount of n-butyllithium was added, to thereby remove a deactivating component. Thereafter, n-butyllithium (2.25 mmol) serving as a polymerization initiator was added thereto, to thereby initiate polymerization. Polymerization was performed under adiabatic conditions, and the temperature rose to 85°C (the highest temperature). When the polymerization conversion was confirmed to be 99%, 1,3-butadiene (10 g) was further added over 1 minute, and further polymerization was performed for 3 minutes. At this timing, a part of the polymer solution was removed, and methanol (0.1 mL) was added to the recovered polymer solution. Then, the thus-obtained mixture was dried by means of a heat roller whose temperature was controlled at 110°C, to thereby secure measurement sample A.

The measurement sample A was isolated, and then the polymer solution was cooled to 50°C. Then, tetramethylethylenediamine (TMEDA) (54.7 mmol) and sec-butyllithium (54.7 mmol) were added to the solution, and the mixture was stirred at 50°C for 30 minutes. Further, 1,1-diphenylethylene (63.8 mmol) was added thereto, and the mixture was stirred for 30 minutes. Subsequently, $CO_2$ was added to the reactor, and the pressure in the reactor was maintained at 0.1 MPa, followed by further mixing for 20 minutes. At this timing, a part of the polymer solution was removed, and hydrochloric acid in methanol (0.1 mol/L, 0.1 mL) was added to the recovered polymer solution. Then, the thus-obtained mixture was dried by means of a heat roller whose temperature was controlled at 110°C, to thereby secure measurement sample B.

After recovery of measurement sample B, methanol (5 mL) was added to a polymer solution containing the thus-obtained modified conjugated diene-based polymer, to thereby terminate the reaction. The solution containing the modified conjugated diene-based polymer was recovered from the reactor, and 1-mol/L aqueous HCl (10 mL) was added to the solution.

Subsequently, 2,6-di-tert-butyl-p-cresol (4.40 g) was added to the thus-obtained polymer solution. Then, the thus-obtained mixture was subjected to steam stripping for removal of the solvent, and the resultant matter was dried by means of a heat roller whose temperature was controlled at 110°C, to thereby yield modified conjugated diene-based polymer A-10. Table 1 shows formulations for producing modified conjugated diene-based polymer A-10, and Table 4 shows properties including values of physical properties of the obtained modified conjugated diene-based polymer A-10.

[Examples 1-8 to 1-10: Synthesis and physical properties of modified conjugated diene-based polymers A-11 to A-13]

The procedure of Example 1-7 was repeated, except that formulations employed in polymerization and formulations for incorporating a modification group were modified as shown in Table 1, to thereby yield modified conjugated diene-based polymers A-11 to A-13. In Examples 1-8 to 1-10, a metal salt listed in Table 1 was added along with 1-mol/L aqueous HCl (10 mL). Table 4 shows properties including values of physical properties of the obtained modified conjugated diene-based polymers A-11 to A-13.

[Example 1-12: Synthesis and physical properties of modified conjugated diene-based polymer B-1]

In an autoclave reactor (capacity: 5 L) with a nitrogen atmosphere, a conjugated diene-based polymer (polybutadiene, "BR01," product of JSR) (100 g) was added to cyclohexane (1,000 g) at room temperature, to thereby prepare a polymer solution. The polymer solution was heated to 50°C. Then, tetramethylethylenediamine (TMEDA) (2.54 mmol) and sec-butyllithium (2.54 mmol) were added to the solution, and the resultant mixture was stirred at 50°C for 30 minutes. Further, α-methylstyrene (6.02 mmol) was added thereto, and the mixture was stirred for 30 minutes. Subsequently, $CO_2$ was added to the reactor, and the pressure in the reactor was maintained at 0.1 MPa, followed by further mixing for 20 minutes. At this timing, a part of the polymer solution was removed, and hydrochloric acid in methanol (0.1 mol/L, 0.1 mL) was added to the recovered polymer solution. Then, the thus-obtained mixture was dried by means of a heat roller whose temperature was controlled at 110°C, to thereby secure measurement sample B. After recovery of measurement sample B from the reactor, methanol (5 mL) was added to a polymer solution containing the thus-obtained modified conjugated diene-based polymer, to thereby terminate the reaction.

To the thus-obtained polymer solution, 2,6-di-tert-butyl-p-cresol (4.40 g) was added. Then, the thus-obtained mixture was subjected to steam stripping for removal of the solvent, and the resultant matter was dried by means of a heat roller whose temperature was controlled at 110°C, to thereby yield modified conjugated diene-based polymer B-1. Table 2 shows formulations for incorporating a modification group to thereby produce modified conjugated diene-based polymer B-1, and Table 4 shows properties including values of physical properties of the obtained modified conjugated

diene-based polymer B-1.

[Example 1-13: Synthesis and physical properties of modified conjugated diene-based polymer B-2]

The procedure of Example 1-12 was repeated, except that formulations for incorporating a modification group were modified as shown in Table 2, to thereby yield modified conjugated diene-based polymer B-2. Table 4 shows properties including values of physical properties of the obtained conjugated diene-based polymer B-2.

After addition of $CX_2$ (X was O or S), a polymer solution of each of the modified conjugated diene-based polymers produced in Examples 1-1 to 1-13 and Comparative Example 1-3 was visually observed, to thereby assess the degree of gelation. Regarding the conjugated diene-based polymer produced in Comparative Example 1-1, the degree of gelation of the polymer solution after addition of a polymerization terminator (i.e., methanol) was assessed. Regarding the modified conjugated diene-based polymer produced in Comparative Example 1-2, the degree of gelation of the polymer solution after addition of end terminal modifying agent (i.e., N,N-bistrimethylsilylaminopropylmethyldiethoxysilane) to thereby conduct reaction was assessed. The degree of gelation was assessed with the following three ratings A to C:

A: No gelation occurred.
B: Partial gelation occurred, but the polymer solution had flowability.
C: Loss of flowability of the polymer solution.

Tables 3 and 4 show the results.

[Table 1]

| | | Comparative Example 1-1 | Comparative Example 1-2 | Comparative Example 1-3 | Example 1-1 | Example 1-2 | Example 1-3 | Example 1-4 | Example 1-5 | Example 1-6 | Example 1-7 | Example 1-8 | Example 1-9 | Example 1-10 | Example 1-11 |
|---|---|---|---|---|---|---|---|---|---|---|---|---|---|---|---|
| (modified) conjugated diene-based polymer | | A-1 | A-2 | A-3 | A-4 | A-5 | A-6 | A-7 | A-8 | A-9 | A-10 | A-11 | A-12 | A-13 | A-14 |
| formulation employed in polymerization | | | | | | | | | | | | | | | |
| solvent | | | | | | | | | | | | | | | |
| : cyclohexane | (g) | 2000 | 2000 | 2000 | 2000 | 2600 | 2600 | 2000 | 2000 | 2600 | 2600 | 2600 | 2600 | 2600 | 2000 |
| vinyl content modulating agent | | | | | | | | | | | | | | | |
| : tetrahydrofuran | (ppm) | 10000 | 10000 | | | | | | | | | | | | |
| : compound Z | (mmol) | | | 1.11 | 1.11 | 0.47 | 0.47 | 1.11 | 1.11 | 0.94 | 0.94 | 0.94 | 0.94 | 0.94 | 16 |
| monomer | | | | | | | | | | | | | | | |
| : butadiene | (g) | 180 | 180 | 180 | 180 | 150 | 150 | 180 | 180 | 150 | 150 | 150 | 150 | 150 | 290 |
| : styrene | (g) | 50 | 50 | 45 | 50 | 40 | 40 | 50 | 50 | 40 | 40 | 40 | 40 | 40 | 80 |
| : 4-metylstyrene | (g) | | | 5 | | | | | | | | | | | |
| : additional butadiene | (g) | 20 | 20 | 20 | 20 | 10 | 10 | 20 | 20 | 10 | 10 | 10 | 10 | 10 | 30 |
| polymerization initiator | | | | | | | | | | | | | | | |
| : n-butyllithium | (mmol) | 2.41 | 2.41 | 2.81 | 281 | 1.12 | 1.12 | 2.81 | 2.81 | 2.25 | 225 | 225 | 225 | 225 | 34 |
| : compound A | (mmol) | | 2.2 | | 2.2 | | | | | | | | | | |
| end terminal modifying agent | | | | | | | | | | | | | | | |
| : compound B | (mmol) | | 2.2 | | | | | | | 2.2 | | | | | |
| : compound C | (mmol) | | | | | | 0.40 | | | | | | | | |
| formulation for incorporating modification group | | | | | | | | | | | | | | | |
| activating agent | | | | | | | | | | | | | | | |
| : sec-butyllithium | (mmol) | | | 12.1 | 12.1 | 47 | 47 | 12.1 | 12.1 | 54.7 | 54.7 | 54.7 | 54.7 | 54.7 | 101 |
| : TMEDA | (mmol) | | | 12.1 | 12.1 | 4.7 | 4.7 | 12.1 | 12.1 | 54.7 | 54.7 | 54.7 | 54.7 | 54.7 | 101 |
| modifying agent | | | | | | | | | | | | | | | |
| : compound D | (mmol) | | | | 18.1 | 5.1 | 5.1 | | | | | | | | |
| : compound E | (mmol) | | | | | | | 18.1 | 18.1 | 63.8 | 63.8 | 63.8 | 63.8 | 63.8 | 121 |

(continued)

| | | | | | | | | | | | | | | | |
|---|---|---|---|---|---|---|---|---|---|---|---|---|---|---|---|
| formulation for incorporating modification group | | | | | | | | | | | | | | | |
| : compound F | (mmol) | | | gas | gas | gas | gas | gas | | gas | gas | gas | gas | gas | gas |
| : compound G | (mmol) | | | | | | | | 14.41 | | | | | | |
| acid or metal salt | | | | | | | | | | | | | | | |
| : 1 mol/L aqueous HCl | (ml) | | | | | | | | | | 10 | 10 | 10 | 10 | |
| ; $ZnCl_2$ | (g) | | | | | | | | | | | 7.8 | | | |
| : $CaCl_2$ | (g) | | | | | | | | | | | | 7.3 | | |
| : $Ti(O^iPr)_4$ | (g) | | | | | | | | | | | | | 16.2 | |

In Table 1, abbreviated compound names of the vinyl content modulating agent, end terminal modifying agent, activating agent, and modifying agent are as follows.

compound Z: 2,2-di(tetrahydrofurfury)propane
compound A: N-(tert-butyldimethylsilyl)-4-piperazine
compound B: N,N-bis(trimethylsilyl)aminopropylmethyldiethoxysilane
compound C: silicon tetrachloride
compound D: α-methylstyrene
compound E: 1,1-diphenylethylene
compound F: $CO_2$
compound G: $CS_2$
TMEDA: tetramethylethylenediamine

[Table 2]

| | | | | Example 1-12 | Example 1-13 |
|---|---|---|---|---|---|
| (modified) conjugated diene-based polymer | | | | B-1 | B-2 |
| formulation for incorporating modification group | | | | | |
| | polymer | | | | |
| | | : BR01 | (g) | 100 | |
| | | SBR 1502 | (g) | | 100 |
| | solvent | | | | |
| | | : cyclohexane | (g) | 1000 | 1000 |
| | activating agent | | | | |
| | | : sec-butyllithium | (mmol) | 2.54 | 4.83 |
| | | : TMEDA | (mmol) | 2.54 | 4.83 |
| | modifying agent | | | | |
| | | : compound D | (mmol) | 6.02 | |
| | | : compound E | (mmol) | | 6.02 |
| | | : compound F | (mmol) | gas | gas |

In Table 2, abbreviated compound names of the polymer, activating agent, and modifying agent are as follows.

BR01: polybutadiene, "BR01," product of JSR

SBR1502: emulsion-polymerized SBR, "JSR1502," product of JSR

TMEDA: tetramethylethylenediamine

compound D: α-methylstyrene

compound E: 1,1-diphenylethylene

compound F: $CO_2$

[Table 3]

| | Comparative Example 1-1 | Comparative Example 1-2 | Comparative Example 1-3 | Example 1-1 | Example 1-2 | Example 1-3 | Example 1-4 | Example 1-5 |
|---|---|---|---|---|---|---|---|---|
| (modified) conjugated diene-based polymer | A-1 | A-2 | A-3 | A-4 | A-5 | A-6 | A-7 | A-8 |

(continued)

| | Comparative Example 1-1 | Comparative Example 1-2 | Comparative Example 1-3 | Example 1-1 | Example 1-2 | Example 1-3 | Example 1-4 | Example 1-5 |
|---|---|---|---|---|---|---|---|---|
| bonded styrene content (wt%) | 20 | 20 | 19 | 18 | 18 | 20 | 19 | 19 |
| vinyl content (mol%) | 48 | 47 | 47 | 47 | 48 | 51 | 48 | 48 |
| total weight average molecular weight (Mw) | 201,000 | 198,000 | 193,000 | 191,000 | 378,000 | 1,215,000 | 150,000 | 183,000 |
| modification structure (particular structure) | - | - | - | (1) | (1) | (1) | (1) | (1) |
| $R^1$, $R^2$, $R^3$ | - | - | - | H, H, Me | H, H, Me | H, H, Me | H, H, Ph | H, H, Ph |
| $Ar^1$, X | - | - | - | Ph, O | Ph, O | Ph, O | Ph, O | Ph, S |
| average chain length $L_{av}$ | - | - | - | 2.2 | 1.8 | 1.9 | 1.0 | 1.1 |
| $M^{r+}$/H | - | - | - | $Li^+$ | $Li^+$ | $Li^+$ | $Li^+$ | $Li^+$ |
| number of particular structures incorporated per polymer chain | - | - | - | 1.7 | 1.9 | 5.4 | 3.1 | 2.8 |
| degree of gelation | A | A | C | A | B | B | A | A |

[Table 4]

| | Example 1-6 | Example 1-7 | Example 1-8 | Example 1-9 | Example 1-10 | Example 1-11 | Example 1-12 | Example 1-13 |
|---|---|---|---|---|---|---|---|---|
| (modified) conjugated diene-based polymer | A-9 | A-10 | A-11 | A-12 | A-13 | A-14 | B-1 | B-2 |
| bonded styrene content (wt%) | 21 | 20 | 20 | 20 | 20 | 21 | 0 | 20 |
| vinyl content (mol%) | 48 | 47 | 47 | 47 | 47 | 51 | 4 | 48 |
| total weight average molecular weight (Mw) | 180,000 | 171,000 | 165,000 | 181,000 | 179,000 | 30,000 | 580,000 | 201,000 |
| modification structure (particular structure) | (1) | (2) | (1) | (1) | (1) | (1) | (1) | (1) |

(continued)

| | Example 1-6 | Example 1-7 | Example 1-8 | Example 1-9 | Example 1-10 | Example 1-11 | Example 1-12 | Example 1-13 |
|---|---|---|---|---|---|---|---|---|
| $R^1$, $R^2$, $R^3$ | H, H, Ph | H, H, Ph | H, H, Ph | H, H, Ph | H, H, Ph | H, H, Ph | H, H, Me | H, H, Ph |
| $Ar^1$, X | Ph, O | Ph, O | Ph, O | Ph, O | Ph, O | Ph, O | Ph, O | Ph, O |
| average chain length $L_{av}$ | 1.0 | 1.1 | 1.1 | 1.0 | 10 | 1.0 | 1.8 | 1.1 |
| $M^{r+}$/H | $Li^+$ | H | $Zn^{2+}$ | $Ca^{2+}$ | $Ti^{4+}$ | $Li^+$ | $Li^+$ | $Li^+$ |
| number of particular structures incorporated per polymer chain | 19 | 22 | 20 | 21 | 17 | 2.7 | 1.9 | 3.1 |
| degree of gelation | B | B | B | B | B | A | A | A |

In Tables 3 and 4, bonded styrene content, vinyl content, and total weight average molecular weight were values determined by use of a polymer solution containing a final target polymer in the cases where incorporation of modification group by the mediation of $CO_2$ or $CS_2$ was not performed (Comparative Examples 1-1 and 1-2), and were values determined by use of measurement sample A in the cases where incorporation of modification group by the mediation of $CO_2$ or $CS_2$ was performed (Examples 1-1 to 1-13 and Comparative Example 1-3). Bonded styrene content and vinyl content were determined in accordance with JIS K6239-1 by means of the aforementioned apparatus. In Tables 3 and 4, modification structures "$R^1$, $R^2$, and $R^3$" and "$Ar^1$ and X" represent $R^1$, $R^2$, $R^3$, $Ar^1$, and X in formula (1) or (2), respectively. "Average chain length $L_{av}$" refers to the average chain length of the structural units derived from compound ST in the entire particular structure included in the polymer. "$M^{r+}$/H" represents a terminal structure of the particular structure. Since no particular structure was incorporated in Comparative Examples 1-1 to 1-3, the symbol "-" was put in the columns regarding to modification structure.

Tables 3 and 4 will be described in detail, taking Example 1-1 as an example. Modified conjugated diene-based polymer A-4 produced in Example 1-1 is a polymer having a partial structure represented by formula (1) in which each of $R^1$ and $R^2$ is a hydrogen atom (H); $R^3$ is a methyl group (Me); $Ar^1$ is a phenyl group (Ph); and $M^{r+}$ is $Li^+$ (i.e., a partial structure represented by formula (c)), and having an average value of "n" in the polymer mass of 2.2.

[F9]

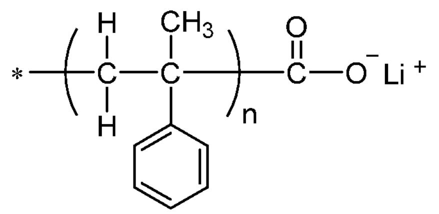

(c)

(In formula (c), the symbol "*" represents a site bonding to a carbon atom forming the main chain of the polymer.)

<The number of particular structures incorporated per polymer chain and method of calculating average chain length $L_{av}$>

Next will be described the number of particular structures incorporated per polymer chain (hereinafter may also be referred simply as the "incorporated particular structure number") and method of calculating average chain length $L_{av}$. The incorporated particular structure number and average chain length ($L_{av}$) were calculated from the amounts of monomers and polymerization initiator used and through $^1$H-NMR analysis and $^{13}$C-NMR analysis employing inverse-gated-decoupling of measurement samples A and B. The specific procedure is as follows.

[Method of calculating the number of incorporated particular structures]

Firstly, the number ($M_{BD}$) of conjugated diene compound units per one polymer chain was calculated from the amounts of the polymerization initiator (n-butyllithium) and conjugated diene compound (1,3-butadiene) involved in polymerization. Next, the vinyl content of the modified conjugated diene-based polymer (mol%, in conjugated diene compound unit, hereinafter may also be referred to as "Vi") was calculated by use of measurement sample B in accordance with JIS K6239-1. The number ($M_{vi}$) of 1,2-vinyl groups per one polymer chain can be represented by formula.

$$M_{vi} = M_{BD} \times Vi/100$$

In addition, $^{13}$C-NMR analysis employing inverse-gated-decoupling of measurement sample B was conducted at 25°C. In $^{13}$C-NMR measurement, a signal at about 180 ppm attributed to the (C=O) moiety of carboxylic group or a signal at about 240 ppm attributed to the (C=S) moiety of dithiocarboxylic group with respect to a signal at about 114 ppm attributed to the $=CH_2$ moiety of 1,2-vinyl group as 1 was employed as a signal intensity ratio ($C_{COOH}$). When the particular structure incorporation number ($N_{COOH}$) is defined as the number of carboxylic groups in one polymer chain, $N_{COOH}$ can be represented by formula (I).

$$N_{COOH} = C_{COOH} \times M_{vi} \quad \cdots \quad (I)$$

Thus, the particular structure incorporation number per one polymer chain can be calculated from the peak intensities obtained through $^{1}$H-NMR analysis and $^{13}$C-NMR analysis employing inverse-gated-decoupling.

[Method of calculating average chain length $L_{av}$]

In heavy chloroform solvent for use in $^{1}$H-NMR measurement, a ratio $r_{calib}$ of integrated intensity of the peak attributed to chloroform ($H_{CHCl3}$) (at about 7.26 ppm) to integrated intensity of the peak attributed to tetramethylsilane serving as an internal standard ($H_{TMS}$) (at about 0 ppm) is calculated in advance.

$$r_{calib} = H_{CHCl3}/H_{TMS} \quad \cdots \quad (II)$$

Firstly, by use of measurement sample A, $^{1}$H-NMR of a conjugated diene-based polymer before incorporation of a particular structure is measured. The integrated intensity of a peak (at 7.7 ppm to 6.1 ppm) obtained through $^{1}$H-NMR is represented by $H_{st1+CHCl3}$, the integrated intensity of a peak (at 6.0 ppm to 4.0 ppm) by $H_{BD1}$, and the integrated intensity of a peak (at about 0 ppm) attributed to tetramethylsilane serving as an internal standard substance by $H_{TMS1}$. $H_{st1+CHCl3}$ is a sum of the integrated intensity of a peak attributed to an aromatic compound present in the conjugated diene-based polymer and the integrated intensity of a peak attributed to chloroform. Thus, by subtracting the integrated intensity of a peak attributed to chloroform from $H_{st1+CHCl3}$, the integrated intensity of only a peak attributed to an aromatic compound present in the conjugated diene-based polymer ($H_{st1}$) can be calculated.

When the ratio of integrated intensity of the peak attributed to chloroform contained in a heavy chloroform solvent used in the measurement to integrated intensity of the peak attributed to tetramethylsilane serving as an internal standard is constant, $H_{st1}$ is represented by the following equation (III).

$$H_{st1} = H_{st1+CHCl3} - H_{TMS1} \times r_{calib} \quad \cdots \quad (III)$$

Here, $r_1$ is defined by the following formula (IV):

$$r_1 = H_{st1}/H_{BD1} \quad \cdots \quad (IV).$$

Next, by use of measurement sample B, $^{1}$H-NMR of a modified conjugated diene-based polymer is measured. The integrated intensity of a peak (at 7.7 ppm to 6.1 ppm) obtained through $^{1}$H-NMR is represented by $H_{Ar+CHCl3}$, the integrated intensity of a peak (at 6.0 ppm to 4.0 ppm) by $H_{BD2}$, and the integrated intensity of a peak (at about 0 ppm) attributed to tetramethylsilane serving as an internal standard substance by $H_{TMS2}$. When the integrated intensity of a peak attributed to an aromatic compound present in the modified conjugated diene-based polymer is denoted by $H_{Ar}$,

the following relationship is established.

$$H_{Ar} = H_{Ar+CHCl3} - H_{TMS2} \times r_{calib} \quad \cdots \quad (V)$$

Here, $r_2$ is defined by the following formula (VI).

$$r_2 = H_{Ar}/H_{BD2} \quad \cdots \quad (VI)$$

Since $H_{Ar}$ is a sum of the integral intensity of a peak attributed to an aromatic compound of a main chain of the modified conjugated diene-based polymer ($H_{st2}$) and the integral intensity of a peak attributed to an aromatic compound present in the particular structure ($H_{sp}$), $H_{Ar}$ is represented by the following equation.

$$H_{Ar} = H_{st2} + H_{sp} \quad \cdots \quad (VII)$$

By inputting equation (VII) into equation (VI), the following equation is derived.

$$r_2 = (H_{st2} + H_{sp})/H_{BD2} \quad \cdots \quad (VIII)$$

Since the mole ratio of the aromatic compound forming a main chain of the conjugated diene-based polymer to the conjugated diene compound is constant before and after incorporation of the particular structure, the following equation is derived.

$$H_{st1}/H_{BD1} = H_{st2}/H_{BD2} \quad \cdots \quad (IX)$$

By inputting equation (IV) and equation (IX) into equation (VIII), the following equation is derived.

$$r_2 = r_1 + (H_{sp}/H_{BD2})$$

By reducing the equation in terms of $H_{sp}$, the following equation (X) can be derived.

$$H_{sp} = (r_2 - r_1) \times H_{BD2} \quad \cdots \quad (X)$$

The number of an aromatic compound which is derived from the particular structure and which has been incorporated into one polymer chain is denoted by $N_{sp}$. The number $N_{sp}$ may also be equivalent to the number of molecules of the aromatic compound derived from the particular structure at one initiating terminal group of the polymer. In the case where the polymer has a structure derived from compound A at an initiating terminal of the polymer, when the integrated intensity of a peak (at about 0.02 ppm) and that of a peak (at about 0.88 ppm) are represented by $H_{TBS}$ and $H_{Me}$, $N_{sp}$ can be represented by the following equation (XI).

$$N_{sp} = \{H_{sp} / (\text{the number of aromatic protons in one molecule of compound D or E})\} / (1/6 \times H_{TBS} + 1/3 \times H_{Me} \quad (XI).$$

When $N_{COOH}$ is employed, average chain length $L_{av}$ may be equivalent to the amount of an aromatic compound which has been derived from a particular structure and which is present in one carboxy group. Thus, average chain length $L_{av}$ is represented by the following equation (XII).

$$L_{av} = N_{sp}/N_{COOH} \quad \cdots \quad (XII)$$

By inputting equations (I) to (VI), (X), and (XI) into equation (XII), average chain length $L_{av}$ can be calculated

from integrated intensities of peaks determined through $^1H$-NMR and $^{13}C$-NMR employing inverse-gated-decoupling.

<Production of rubber compositions and cross-linked rubbers>

[Examples 2-1 to 2-13, Comparative Examples 2-1 and 2-2]

Each of the above-produced (modified) conjugated diene-based polymers A-1, A-2, A-4 to A-14, B-1, and B-2 was blended with other components according to the formulations shown in Table 5. The resultant mixture was kneaded, to thereby prepare a rubber composition. Kneading was conducted in the following procedure. A first-stage kneading was performed by means of Plastomill (product of Toyo Seiki Seisaku-sho, Ltd., capacity: 250 mL) equipped with a temperature-controller under predetermined conditions (filling rate: 72% and rotation rate: 60 rpm). Specifically, a (modified) conjugated diene-based polymer (each of A-1, A-2, A-4 to A-14, B-1, and B-2), silica, a silane coupling agent, stearic acid, zinc oxide, and an antioxidant were mixed and kneaded. Subsequently, a second-stage kneading was performed by cooling the above-prepared composition to room temperature and blending the resultant mixture with a vulcanization accelerator and sulfur. The thus-obtained rubber composition was molded and vulcanized through vulcanization pressing at 160°C for a specific time, to thereby yield a cross-linked rubber (i.e., a vulcanized rubber). Also, the mechanical strength and wear resistance of each cross-linked rubber was assessed. Table 5 shows the results. Modified conjugated diene-based polymer (A-3) produced in Comparative Example 1-3 gelled in such an extent that a polymer solution thereof lost its fluidity. Thus, the cross-linked rubber was not assessed in terms of mechanical strength and wear resistance.

Tensile strength: A cross-linked product sample was subjected to a tensile test in accordance with JIS K6251: 2010. In the test, the test sample was a dumbbell No. 3 sample, and tensile stress at break (TB, MPa) and elongation at break (EB, %) were measured at room temperature. The greater the TB and EB, the greater the breaking strength (i.e., the more excellent the mechanical strength of the material). The mechanical strength was calculated from a tensile product (=(TB×EB)), and the product value was assessed as an index with respect to the tensile product of Comparative Example 1. The greater the tensile product, the more favorable the mechanical strength.

Wear resistance: The wear resistance of a cross-linked product sample was measured by means of a DIN wear tester (product of Toyo Seiki Seisaku-sho, Ltd.) in accordance with JIS K 6264-2:2005 at a load of 10 N and 25°C. The wear resistance was assessed with respect to the wear resistance of Comparative Example 1 as "100." The greater the determined value, the more favorable the wear resistance.

[Table 5]

| formulation | Example 2-1 | Example 2-2 | Example 2-3 | Example 2-4 | Example 2-5 | Example 2-6 | Example 2-7 | Example 2-8 | Example 2-9 | Example 2-10 | Example 2-11 | Example 2-12 | Example 2-13 | Comparative Example 2-1 | Comparative Example 2-2 |
|---|---|---|---|---|---|---|---|---|---|---|---|---|---|---|---|
| (modified) conjugated diene-based polymer | A-4 (100) | A-5 (100) | A-6 (100) | A-7 (100) | A-8 (100) | A-9 (100) | A-10 (100) | A-11 (100) | A-12 (100) | A-13 (100) | A-14 (100) | B-1 (100) | B-2 (100) | A-1 (100) | A-2 (100) |
| silica *1) | 25 | 25 | 25 | 25 | 25 | 25 | 25 | 25 | 25 | 25 | 25 | 25 | 25 | 25 | 25 |
| silane coupling agent *2) | 2 | 2 | 2 | 2 | 2 | 2 | 2 | 2 | 2 | 2 | 2 | 2 | 2 | 2 | 2 |
| stearic acid | 2 | 2 | 2 | 2 | 2 | 2 | 2 | 2 | 2 | 2 | 2 | 2 | 2 | 2 | 2 |
| zinc oxide | 3 | 3 | 3 | 3 | 3 | 3 | 3 | 3 | 3 | 3 | 3 | 3 | 3 | 3 | 3 |
| antioxidant *3) | 1 | 1 | 1 | 1 | 1 | 1 | 1 | 1 | 1 | 1 | 1 | 1 | 1 | 1 | 1 |
| vulcanization accelerator D *4) | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| vulcanization accelerator CZ *5) | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 |
| sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| mechanical strength (tensile product) | 101 | 104 | 125 | 101 | 110 | 235 | 183 | 308 | 341 | 105 | 64 | 180 | 107 | 100 | 95 |
| wear resistance | 110 | 109 | 141 | 115 | 118 | 198 | 198 | 241 | 279 | 110 | 83 | 218 | 116 | 100 | 98 |

Specifically, the components shown in Table 5 are as follows.

*1) ZEOSIL 1165MP (product of Rhodia)
*2) Process oil T-DAE (product of Evonik)
*3) Ozonone 6C (product of Seiko Chemical Co., Ltd.)
*4) Nocceler D (product of Ouchi Sinko Chemical Industrial Co., Ltd.)
*5) Nocceler DZ (product of Ouchi Sinko Chemical Industrial Co., Ltd.)

As shown in Table 5, cross-linked rubbers produced from rubber compositions of Examples 2-1 to 2-13 exhibited a tensile product and wear resistance greater than those of rubber compositions of Comparative Examples 1 and 2 (i.e., more excellent mechanical strength). As shown in Tables 3 and 4, modified conjugated diene-based polymers A-4 to A-14, B-1, and B-2 were not gelled during production of the polymers. In some cases, partial gelation occurred, but flowability was maintained. Among these polymers, rubber compositions of Examples 2-6 to 2-9 employing modified conjugated diene-based polymers A-9 to A-12, each having about 20 particular structures incorporated into one polymer chain, exhibited more excellent mechanical strength and wear resistance, as compared with rubber compositions of Examples 2-1 and 2-2 employing modified conjugated diene-based polymers A-4 and A-5, each having only 1.7 or 1.9 particular structures incorporated into one polymer chain. Also, Example 2-4 was compared with Example 2-11 in terms of the molecular weight of the modified conjugated diene-based polymer. As a result, Example 2-4 employing modified conjugated diene-based polymer A-7 having an Mw of 150,000, exhibited more excellent mechanical strength and wear resistance, as compared with Example 2-11 employing modified conjugated diene-based polymer A-14 having a relatively small Mw of 30,000.

The above-described test results have proven that, by use of a modified conjugated diene-based polymer having a particular structure, a cross-linked rubber exhibiting excellent mechanical strength and wear resistance can be produced, while gelation during production of the rubber is suppressed.

## Claims

1. A modified conjugated diene-based polymer, comprising:

   a structural unit derived from a conjugated diene compound; and
   at least one species selected from the group consisting of a partial structure represented by formula (1) and a partial structure represented by formula (2):

   [F1]

   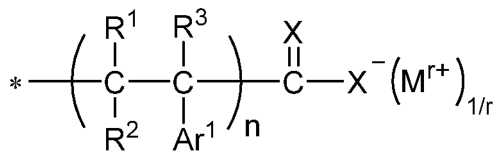 (1)

   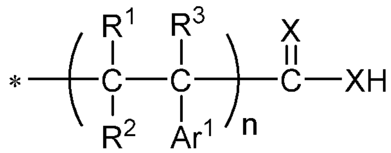 (2)

   wherein each of $R^1$ and $R^2$ independently represents a hydrogen atom or a C1 to C20 hydrocarbyl group; $R^3$ represents a C1 to C20 hydrocarbyl group; $Ar^1$ represents an aryl group; X represents an oxygen atom or a sulfur atom; $M^{r+}$ represents a metal ion; n is an integer of 1 to 10; when a plurality of $R^1$, $R^2$, $R^3$, and $Ar^1$ are present in any of formulas (1) and (2), the plurality of $R^1$, $R^2$, $R^3$, and $Ar^1$ are each identical to or different from one another; r is an integer of 1 to 4; and "*" represents an atomic bond.

2. The modified conjugated diene-based polymer according to claim 1,
   wherein the atomic bond in any of formulas (1) and (2) bonds to a carbon atom forming a main chain of the polymer.

**3.** The modified conjugated diene-based polymer according to claim 1, wherein $M^{r+}$ is selected from the group consisting of an alkali metal ion, an alkaline earth metal ion, a zinc ion, an aluminum ion, and an iron ion.

**4.** The modified conjugated diene-based polymer according to claim 1, wherein the modified conjugated diene-based further comprises a structural unit derived from a compound represented by formula (4):

[F2]

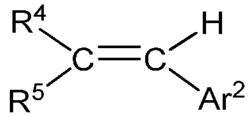

(4)

wherein each of $R^4$ and $R^5$ independently represents a hydrogen atom or a C1 to C20 hydrocarbyl group; and $Ar^2$ represents an aryl group.

**5.** The modified conjugated diene-based polymer according to claim 1, wherein the modified conjugated diene-based polymer has a weight average molecular weight of 30,000 to 2,000,000.

**6.** The modified conjugated diene-based polymer according to claim 1, wherein the modified conjugated diene-based polymer comprises at least one functional group selected from the group consisting of an amino group, a nitrogen-containing heterocyclic group, a phosphino group, a hydroxy group, a thiol group, and a hydrocarbyloxysilyl group.

**7.** A method for producing a modified conjugated diene-based polymer, the method comprising:

a step of adding an alkali metal compound to a polymer solution comprising a conjugated diene-based polymer;
a step of adding a compound represented by formula (3):

[F3]

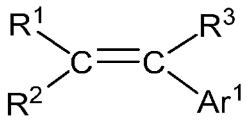

(3)

wherein each of $R^1$ and $R^2$ independently represents a hydrogen atom or a C1 to C20 hydrocarbyl group; $R^3$ represents a C1 to C20 hydrocarbyl group; and $Ar^1$ represents an aryl group,
to the polymer solution to which the alkali metal compound has been added; and
a step of adding one or both of carbon dioxide and carbon disulfide to a reaction system to which the compound represented by formula (3) has been added.

**8.** The method for producing the modified conjugated diene-based polymer according to claim 7, wherein the polymer solution is produced by polymerizing monomers comprising a conjugated diene compound in a solvent in the presence of a metal compound comprising an alkali metal element or an alkaline earth metal element.

**9.** The method for producing the modified conjugated diene-based polymer according to claim 8, wherein the polymer solution is produced by polymerizing the monomers, to thereby yield a conjugated diene-based polymer having an active terminal, and, subsequently, reacting the active terminal, in a solvent, with a compound which comprises at least one element selected from the group consisting of nitrogen, phosphorus, oxygen, sulfur, and silicon and which can react with the active terminal.

**10.** The method for producing the modified conjugated diene-based polymer according to claim 8, wherein the metal compound comprises a metal amide compound comprising an alkali metal element or an alkaline earth metal element.

**11.** The method for producing the modified conjugated diene-based polymer according to claim 7, which method further

comprises a step of adding one or both of an acid and a metal salt to a reaction system to which one or both of carbon dioxide and carbon disulfide have been added.

**12.** A polymer composition comprising:

the modified conjugated diene-based polymer according to claim 1, and;
at least one species selected from the group consisting of silica and carbon black.

**13.** The polymer composition according to claim 12, wherein the polymer composition further comprises sulfur.

**14.** A cross-linked product produced by applying the polymer composition according to claim 12 or 13.

**15.** A tire comprising a tread and a sidewall, wherein one or both of the tread and the sidewall is formed by applying the polymer composition according to claim 12 or 13.

## INTERNATIONAL SEARCH REPORT

International application No.
**PCT/JP2022/029658**

**A. CLASSIFICATION OF SUBJECT MATTER**

***C08C 19/00***(2006.01)i; ***C08F 4/44***(2006.01)i; ***C08F 8/06***(2006.01)i; ***C08F 8/34***(2006.01)i; ***C08F 36/04***(2006.01)i; ***C08K 3/04***(2006.01)i; ***C08K 3/06***(2006.01)i; ***C08K 3/36***(2006.01)i; ***C08L 15/00***(2006.01)i
FI: C08C19/00; C08F36/04; C08F8/34; C08F8/06; C08K3/36; C08K3/04; C08L15/00; C08K3/06; C08F4/44

According to International Patent Classification (IPC) or to both national classification and IPC

**B. FIELDS SEARCHED**

Minimum documentation searched (classification system followed by classification symbols)

C08C19/00; C08F4/44; C08F8/06; C08F8/34; C08F36/04; C08K3/04; C08K3/06; C08K3/36; C08L15/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2012-117022 A (YOKOHAMA RUBBER CO LTD) 21 June 2012 (2012-06-21) claims, paragraphs [0006], [0018], [0020], [0055]-[0056], [0059]-[0066], [0070]-[0071] | 1-6, 12-15 |
| Y | | 7-11 |
| Y | WO 2019/045053 A1 (BRIDGESTONE CORPORATION) 07 March 2019 (2019-03-07) claims, paragraphs [0006], [0047] | 7-11 |

☐ Further documents are listed in the continuation of Box C.　☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 October 2022** | **18 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/029658**

| Patent document cited in search report | Publication date (day/month/year) | Patent family member(s) | Publication date (day/month/year) |
|---|---|---|---|
| JP 2012-117022 A | 21 June 2012 | (Family: none) | |
| WO 2019/045053 A1 | 07 March 2019 | US 2021/0115175 A1<br>claims, paragraphs [0007], [0060]<br>EP 3677600 A1<br>CN 111051352 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021128526 A
- WO 2019045053 A
- JP 2011140613 A